# FASCICULE DE BREVET EUROPEEN

(11) **EP 1 376 807 B1**
(45) Date de publication et mention de la délivrance du brevet: **30.11.2016**
(21) Numéro de dépôt: 03291445.9
(22) Date de dépôt: 16.06.2003
(51) Int. Cl.: H02G 3/32

(54) **Dispositif de fixation rapide d'un conduit de cheminement de câbles à une paroi**
Schnellbefestigungsvorrichtung für Wandkabelkanal
Quick mounting system for a wall cable duct

(30) Priorité: 17.06.2002 FR 0207431
(43) Date de publication de la demande: 02.01.2004
(73) Titulaire: PLANET-WATTOHM, 60300 Senlis (FR)
(72) Inventeur: Peyriga, Pascal, 60320 Bethisy Saint Martin (FR); Perrard, Stéphane, 95330 Domont (FR)
(74) Mandataire: Santarelli

(56) Documents cités:
- EP-A- 0 751 598
- FR-A- 2 697 690
- FR-A- 2 716 242
- FR-A- 2 785 340

## Description

La présente invention concerne d'une manière générale la fixation de conduits de cheminement de câbles à une structure porteuse.

De tels conduits permettent de supporter et de guider des câbles tels que des câbles électriques, des câbles téléphoniques, des câbles de fibre optique, des câbles de réseau informatique, voire des canalisations rigides ou flexibles.

Ils ont globalement une section en U et sont constitués d'une tôle ou d'une matière plastique perforée ou encore de fils soudés ensemble de manière à former une sorte de panier courant suivant un parcours souhaité.

L'invention concerne plus particulièrement un dispositif de fixation à une paroi d'un tel conduit, comprenant, d'une part, un support pourvu d'une première partie à fixer à ladite paroi et d'une deuxième partie apte à recevoir en appui ledit conduit, et, d'autre part, des moyens de verrouillage assurant la fixation dudit conduit audit support.

Un tel dispositif de fixation est connu notamment du document FR 2 697 690.

Selon ce document, la première partie du support est une pièce distincte constituée par un profilé en U formant une échelle fixée par des organes d'ancrage à la paroi considérée. La deuxième partie du support est une console à rapporter sur cette échelle et comporte, en tant que moyens de verrouillage, d'une part, des ergots aptes à coopérer avec des fils métalliques d'un treillis de fils soudés constituant le conduit de cheminement de câbles, et, d'autre part, des évidements destinés à accueillir des systèmes d'ancrage du type vis-écrou pour sécuriser le positionnement dudit conduit de cheminement de câbles sur ladite deuxième partie du support.

Plus généralement, dans les dispositifs de fixation de type connu, les moyens de verrouillage du conduit audit support sont constitués par des systèmes vis-écrou impliquant souvent l'utilisation d'autres composants du type rondelles, clames ou autres, qui imposent à l'installateur de disposer d'un outillage minimum pour mettre en oeuvre ces moyens de verrouillage. Cet outillage minimum est constitué par plusieurs types de clés, des tournevis ou autres.

Par rapport à l'état de la technique précité, l'invention propose un nouveau dispositif de fixation d'un conduit de cheminement de câbles dans lequel l'immobilisation du conduit de cheminement de câbles sur le support peut être réalisée facilement et de manière rapide par l'installateur sans qu'il ait besoin d'utiliser un outillage spécifique.

Selon un premier aspect, le dispositif de fixation selon l'invention est caractérisé en ce que la deuxième partie du support comprend au moins une portion cambrée qui définit intérieurement un canal, cette portion cambrée étant ajourée par des évidements espacés les uns des autres suivant la longueur de ladite portion cambrée et définissant entre eux des pattes cambrées qui s'élèvent au-dessus d'une face d'appui de ladite deuxième partie du support, et en ce que lesdits moyens de verrouillage comprennent un élément de verrouillage destiné à être engagé longitudinalement dans ledit canal pour l'intercaler entre le fond dudit conduit, qui prend appui sur ladite face d'appui de ladite deuxième partie du support en s'engageant dans au moins certains évidements de ladite portion cambrée, et au moins deux desdites pattes cambrées pour bloquer ledit conduit sur ledit support.

Selon un premier mode de réalisation du dispositif de fixation précité conforme à l'invention, ledit élément de verrouillage est une épingle en forme de U dont au moins une des branches est apte à s'engager dans ledit canal.

Selon ce mode de réalisation, lesdits moyens de verrouillage comprennent également un élément de blocage apte à bloquer ledit élément de verrouillage en translation selon l'axe longitudinal dudit canal lorsque celui-ci est engagé dans ledit canal.

Préférentiellement, cet élément de blocage peut être une languette, rabattable par pliage, qui s'étend en saillie à partir d'un bord d'extrémité de ladite deuxième partie du support selon l'axe longitudinal dudit canal.

Selon un autre mode de réalisation du dispositif de fixation conforme à l'invention, ledit élément de verrouillage est une clé avec un corps allongé et une tête, le corps de la clé étant apte à être engagé longitudinalement dans le canal pour l'intercaler entre le fond du conduit et lesdites pattes cambrées du support, et la tête de la clé étant apte à se coincer élastiquement dans ledit canal.

Préférentiellement, le corps de la clé peut comporter des aménagements pour exercer une force d'appui sur le fond du conduit lors du coincement de la tête de la clé dans ledit canal.

De tels aménagements peuvent être des surfaces de came ou encore des bossages.

Selon le mode de réalisation précité, la tête de la clé constituant l'élément de verrouillage peut comporter un bossage apte à se verrouiller dans un crevé prévu dans la portion cambrée dudit support.

Selon un second aspect, l'invention propose un dispositif de fixation particulièrement adapté à la fixation à une paroi d'un conduit de cheminement de câbles présentant un fond pourvu d'ouvertures, ce dispositif de fixation étant caractérisé en ce que la deuxième partie du support comprend au moins une portion cambrée qui définit intérieurement un canal, cette portion cambrée étant ajourée par des évidements espacés les uns des autres suivant la longueur de ladite portion cambrée et définissant entre eux des pattes cambrées qui s'élèvent au-dessus d'une face de ladite deuxième partie du support, et en ce que lesdits moyens de verrouillage comprennent deux éléments de verrouillage, à savoir un premier élément apte à être positionné, au droit d'un des évidements de la portion cambrée, selon une première direction perpendiculaire à ladite face de ladite deuxième partie dudit support, en traversant au moins une ouverture prévue dans le fond dudit conduit, et un deuxième élément apte à être engagé dans ledit canal selon une deuxième direction parallèle à ladite face de ladite deuxième partie dudit support de manière à coopérer avec ledit premier élément en prenant en sandwich le fond dudit conduit qui prend appui sur les crêtes desdites pattes cambrées pour bloquer ledit conduit sur ledit support.

Selon un premier mode de réalisation du dispositif de fixation précité conforme à l'invention, ladite deuxième direction est la direction de l'axe longitudinal dudit canal.

Selon un deuxième mode de réalisation du dispositif de fixation précité conforme à l'invention, ladite deuxième direction est une direction transversale à l'axe longitudinal dudit canal.

Préférentiellement, dans le dispositif de fixation précité, le deuxième élément est une épingle en forme de U.

Selon un mode de réalisation de ce dispositif de fixation conforme à l'invention, le premier élément est un bouton dont le fût comporte une ouverture traversante pour le passage dudit deuxième élément.

Selon un autre mode de réalisation de ce dispositif de fixation conforme à l'invention, le premier élément est un cavalier dont les branches forment, à leurs extrémités, des ouvertures de passage dudit deuxième élément.

Avantageusement, ledit deuxième élément porte des moyens de blocage aptes à le verrouiller en position dans ledit premier élément.

Selon un troisième aspect, l'invention propose un dispositif de fixation, caractérisé en ce que la deuxième partie du support comprend au moins une portion cambrée qui définit intérieurement un canal, cette portion cambrée étant ajourée par des évidements espacés les uns des autres suivant la longueur de ladite portion cambrée et définissant entre eux des pattes cambrées qui s'élèvent au-dessus d'une face de ladite deuxième partie du support, et en ce que lesdits moyens de verrouillage comprennent deux éléments de verrouillage, à savoir un premier élément apte à s'accrocher audit conduit et à être engagé, par un évidement, transversalement dans ledit canal en étant parallèle à ladite face de ladite deuxième partie dudit support, le fond dudit conduit prenant appui sur les crêtes desdites pattes cambrées, et un deuxième élément apte à être engagé longitudinalement dans ledit canal pour l'intercaler entre lesdites pattes cambrées et ledit premier élément et bloquer ledit conduit sur ledit support.

Selon un mode de réalisation préférentiel de ce dispositif de fixation, le premier élément est une agrafe et le deuxième élément est une épingle en forme deU.

D'autres caractéristiques non limitatives et avantageuses du dispositif de fixation conforme à l'invention sont les suivantes :
- ladite deuxième partie du support comporte, sur ses deux bords longitudinaux, deux portions cambrées ajourées d'évidements échelonnés sur la longueur desdites portions cambrées, les évidements situés d'un même côté dudit support étant deux à deux placés sur une même ligne de niveau ;
- ladite deuxième partie comporte une portion centrale plane s'étendant entre ses deux portions cambrées ;
- ladite portion centrale plane comporte une série de trous allongés échelonnés sur la longueur de ladite deuxième partie ;
- chaque portion cambrée de ladite deuxième partie comporte, d'une part, une première série d'évidements échelonnés sur la longueur de ladite portion cambrée, disposés d'un côté dudit support et définissant entre eux des pattes cambrées, et, d'autre part, une deuxième série d'évidements échelonnés sur la longueur de ladite portion cambrée, disposés d'un autre côté opposé dudit support et définissant entre eux des pattes cambrées ;
- les évidements de la deuxième série sont décalés par rapport aux évidements de la première série ;
- les évidements de la deuxième série sont en regard des évidements de la première série ;
- la première partie dudit support se raccorde continûment à la deuxième partie par une portion coudée de sorte que ledit support présente la forme d'une équerre ;
- la première partie dudit support comporte une portion centrale plane pourvue d'une série de trous allongés échelonnés suivant la longueur de ladite première partie ;
- la première partie dudit support comporte, également, dans le prolongement de chaque portion cambrée de ladite deuxième partie, une portion cambrée ;
- ladite première partie du support comporte, sur ses deux bords longitudinaux, deux portions cambrées définissant chacune intérieurement un canal, séparées l'une de l'autre par une portion centrale plane ajourée de trous allongés échelonnés sur la longueur de ladite première partie ;
- chaque portion cambrée de ladite première partie dudit support est ajourée par des évidements espacés les uns des autres suivant la longueur de ladite portion cambrée et définissant entre eux des pattes cambrées qui s'élèvent au-dessus d'une face de ladite première partie de sorte que ledit support est réversible avec des première et deuxième parties identiques ou similaires ;
- ledit support est réalisé d'une seule pièce en tôle ou par moulage d'une matière plastique ;
- les deux bords longitudinaux dudit support sont cambrés pour former deux portions cambrées parallèles à section ouverte ;
- un desdits bords longitudinaux est cambré en direction d'un côté dudit support de sorte que ladite portion cambrée ainsi formée s'ouvre dudit côté dudit support tandis que l'autre desdits bords longitudinaux est cambré en direction de l'autre côté opposé dudit support de sorte que ladite portion cambrée ainsi formée s'ouvre de l'autre côté opposé dudit support ;
- les deux bords longitudinaux dudit support sont cambrés en direction d'un même côté du support de sorte que lesdites portions cambrées ainsi formées s'ouvrent de ce côté dudit support ;
- les évidements formés dans chaque portion cambrée sont des ouvertures découpées à contour fermé ;
- les évidements formés dans chaque portion cambrée sont des encoches découpées à contour ouvert ; et
- les évidements formés dans chaque portion cambrée sont réalisés par découpage et emboutissage des parties de la portion cambrée.

La description qui va suivre en regard des dessins annexés, donnés à titre d'exemples non limitatifs, fera bien comprendre en quoi consiste l'invention et comment elle peut être réalisée.

Sur les figures annexées :
- la figure 1 est une vue schématique en perspective d'un premier mode de réalisation du dispositif de fixation selon l'invention, le support de ce dispositif étant positionné selon une première orientation ;
- la figure 2 est une vue schématique en perspective du dispositif de fixation de la figure 1, le support de ce dispositif étant positionné selon une deuxième orientation ;
- la figure 3 est une vue schématique en perspective d'un deuxième mode de réalisation du dispositif de fixation selon l'invention, le support de ce dispositif étant positionné selon une première orientation ;
- les figures 4 et 5 sont des vues schématiques en perspective représentant deux étapes de positionnement et de verrouillage d'un conduit de cheminement de câbles sur le dispositif de fixation de la figure 3 ;
- la figure 6 est une vue schématique en perspective du dispositif de fixation de la figure 3, le support de ce dispositif étant positionné selon une deuxième orientation ;
- les figures 7 et 8 sont des vues schématiques en perspective représentant deux étapes de positionnement et de verrouillage d'un conduit de chemin de câbles en fils sur le dispositif de fixation de la figure 6 ;
- les figures 9 et 10 sont des vues schématiques en perspective représentant deux étapes de positionnement et de verrouillage d'un conduit de cheminement de câbles selon un troisième mode de réalisation du dispositif de fixation selon l'invention ;
- la figure 11 est une vue en perspective d'un élément de verrouillage d'un quatrième mode de réalisation du dispositif de fixation selon l'invention ;
- la figure 12 est une vue schématique en perspective du quatrième mode de réalisation du dispositif de fixation selon l'invention ;
- la figure 13 est une vue schématique en perspective d'un cinquième mode de réalisation du dispositif de fixation selon l'invention ;
- la figure 14 est une vue schématique en perspective d'un élément de verrouillage d'un sixième mode de réalisation du dispositif de fixation selon l'invention ;
- la figure 15 est une vue schématique en perspective du sixième mode de réalisation du dispositif de fixation selon l'invention ;
- la figure 16 est une vue arrière schématique en perspective d'un septième mode de réalisation du dispositif de fixation selon l'invention ;
- les figures 17 à 19 sont des vues schématiques en perspective montrant différentes orientations du support du septième mode de réalisation du dispositif de fixation selon l'invention sur lequel sont rapportés plusieurs conduits de cheminement câbles ;
- la figure 20 est une vue schématique en perspective de deux dispositifs de fixation selon l'invention accolés sur lesquels sont rapportés plusieurs conduits de cheminement de câbles ;
- la figure 21 est une vue schématique en perspective du septième mode de réalisation du dispositif de fixation selon l'invention sur lequel est rapporté un conduit de cheminement de câbles à parois pleines perforées, spécialement adapté à ce dispositif de fixation ;
- la figure 21A est une vue schématique partielle en perspective d'un autre mode de réalisation d'un conduit de cheminement de câbles à parois pleines perforées, spécialement adapté au septième mode de réalisation du dispositif de fixation selon l'invention ;
- la figure 22 est une vue schématique en perspective éclatée d'un huitième mode de réalisation du dispositif de fixation selon l'invention ;
- la figure 23 est une vue schématique en perspective assemblée du dispositif de fixation de la figure 22 ;
- la figure 24 est une vue de côté de la figure 23 ;
- la figure 25 est une vue schématique en perspective éclatée d'un neuvième mode de réalisation du dispositif de fixation selon l'invention ;
- la figure 26 est une vue schématique en perspective assemblée du dispositif de fixation de la figure 25 ;
- la figure 27 est une vue schématique de côté de la figure 26 ;
- la figure 28 est une vue schématique en perspective éclatée d'un dixième mode de réalisation du dispositif de fixation selon l'invention ;
- la figure 29 est une vue schématique de côté assemblée du dispositif de fixation de la figure 10 ;
- la figure 30 est une vue schématique en perspective de moyens de verrouillage d'un onzième mode de réalisation du dispositif de fixation selon l'invention ;
- la figure 31 est une vue schématique en perspective éclatée du onzième mode de réalisation du dispositif de fixation selon l'invention ; et
- la figure 32 est une vue schématique en perspective assemblée du dispositif de fixation de la figure 31.

En préliminaire, on notera que les éléments identiques ou similaires des différents modes de réalisation du dispositif selon l'invention, représentés sur les différentes figures, seront, dans la mesure du possible, référencés par les mêmes signes de référence et ne seront pas décrits à chaque fois.

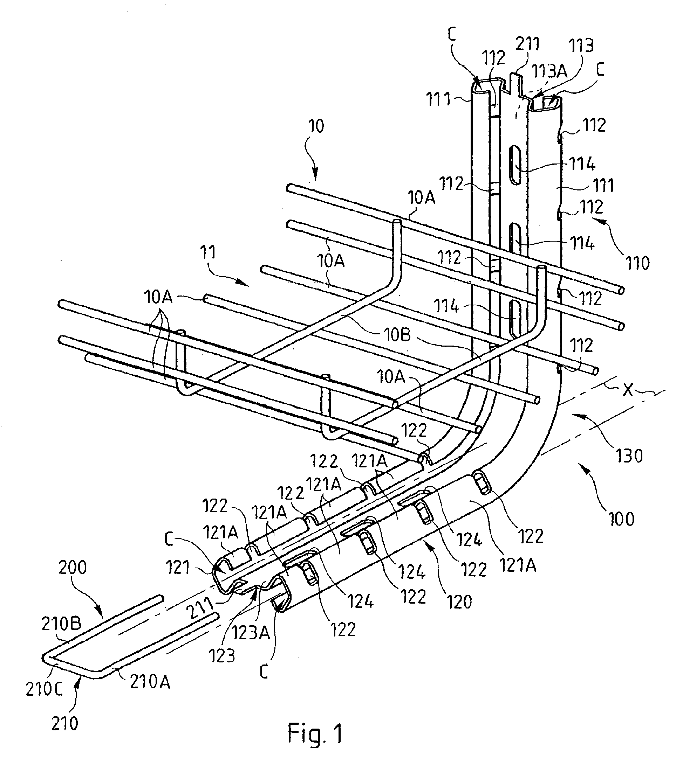

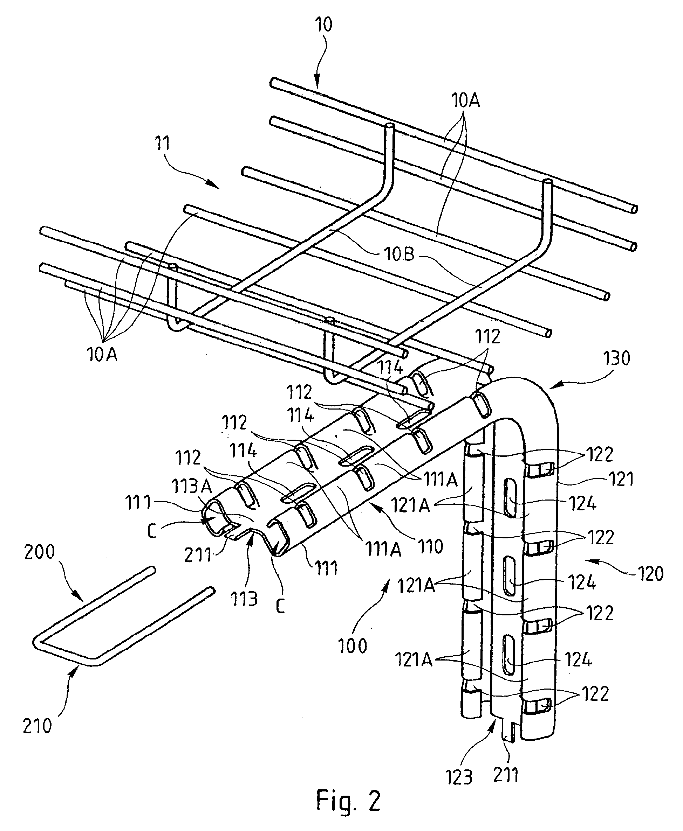

Sur les figures 1 et 2, on a représenté un premier mode de réalisation d'un dispositif de fixation à une paroi (non représentée) d'un conduit 10 de cheminement de câbles.

Ici, le conduit 10 de cheminement de câbles présente une section en U avec un fond 11 à partir duquel s'élèvent des ailes latérales parallèles. Ce conduit 10 de cheminement de câbles est un treillis de fils longitudinaux 10A et transversaux 10B soudés entre eux par points.

Le dispositif de fixation comprend un support 100 à fixer à la paroi (non représentée) et des moyens de verrouillage 200 assurant la fixation du conduit 10 audit support 100.

Le support 100 est pourvu d'une première partie 110 à fixer à ladite paroi et d'une deuxième partie 120 apte à recevoir en appui le conduit 10.

Avantageusement, le support 100 est réalisé en une seule pièce par pliage, emboutissage et/ou découpage d'une tôle.

Bien entendu, on peut envisager que ce support soit réalisé en une seule pièce par moulage d'une matière synthétique.

La première partie 110 de ce support 100 se raccorde alors continûment à la deuxième partie 120 par une portion coudée 130 de sorte que le support 100 présente la forme d'une équerre.

La deuxième partie 120 du support 100 comprend ici, sur ses deux bords longitudinaux, deux portions cambrées 121 qui définissent chacune intérieurement un canal C. Chaque portion cambrée 121 est ajourée par des évidements 122 espacés les uns des autres suivant la longueur de ladite portion cambrée 121 et définissant entre eux des pattes cambrées 121A qui s'élèvent au-dessus d'une face d'appui 123A de ladite deuxième partie 120 du support 100.

Comme le montrent les figures 1 et 2, les évidements 122 prévus dans les deux portions cambrées 121 sont ici situés d'un même côté du support 100 et sont deux à deux placés sur une même ligne de niveau.

En outre, les évidements 122 prévus dans la portion cambrée 121 située à droite de la figure 1 sont des ouvertures ou lumières à contour fermé, alors que les évidements 122 prévus dans la portion cambrée 121 située à gauche sur la figure 1 sont des encoches à contour ouvert.

Les évidements 122 peuvent être réalisés par découpage de la tôle constituant le support 100.

La deuxième partie 120 du support 100 comporte également une portion centrale plane 123 s'étendant entre les deux portions cambrées 121. La face d'appui 123A est alors une face de cette portion centrale plane 123.

Cette portion centrale plane 123 comporte une série de trous allongés 124, de forme oblongue, échelonnés sur la longueur de ladite deuxième partie 120.

Selon le mode de réalisation représenté sur les figures 1 et 2, la première partie 110 du support 100 comporte, également, dans le prolongement de chaque portion cambrée 121 de la deuxième partie 120, une portion cambrée 111.

Ainsi, cette première partie 110 du support 100 comporte, sur ses deux bords longitudinaux, deux portions cambrées 111 séparées l'une de l'autre par une portion centrale plane 113 ajourée de trous allongés 114, de forme oblongue, échelonnés sur la longueur de ladite première partie 110.

La première partie 110 est fixée à la paroi considérée par des moyens d'ancrage introduits au travers des trous allongés 114 et ancrés dans ladite paroi.

Selon le mode de réalisation représenté sur les figures 1 et 2, chaque portion cambrée 111 de ladite première partie 110 définit également intérieurement un canal C.

En fait, les deux bords longitudinaux du support 100 sont cambrés continûment pour former les portions cambrées 111, 121 qui s'étendent en parallèle sur les deux bords longitudinaux des première et deuxième parties dudit support 100.

Le cambrage desdits bords longitudinaux peut être réalisé par formage ou emboutissage de la tôle constituant ledit support 100.

Chaque portion cambrée 111 de la première partie 110 n'est qu'une continuité de la portion cambrée 121 correspondante de la deuxième partie 120, la portion courbe 130 reliant les première et deuxième parties 110, 120 du support 100 étant bordée également par une portion cambrée.

Selon le premier mode de réalisation du dispositif de fixation selon l'invention représenté sur les figures 1 et 2, un desdits bords longitudinaux du support 100 est cambré en direction d'un côté dudit support 100 de sorte que la portion cambrée 121, 111 ainsi formée s'ouvre dudit côté du support 100 tandis que l'autre desdits bords longitudinaux du support 100 est cambré en direction de l'autre côté opposé dudit support 100 de sorte que ladite portion cambrée 121, 111 ainsi formée s'ouvre de l'autre côté opposé dudit support 100.

Ainsi, le support 100 présente une section globalement en huit.

Avantageusement, selon le mode de réalisation représenté sur les figures 1 et 2, chaque portion cambrée 111 de ladite première partie 110 dudit support 100 est ajourée par des évidements 112 espacés les uns des autres suivant la longueur de ladite portion cambrée 111 et définissant entre eux des pattes cambrées 111A qui s'élèvent au-dessus d'une face d'appui 113A de ladite première partie 110.

Les évidements 112 prévus dans les portions cambrées 111 de la première partie 110 sont orientés à l'opposé des évidements 122 prévus dans les portions cambrées 121 de la deuxième partie 120 de sorte que les pattes cambrées 111A définies entre les évidements 112 s'élèvent au-dessus d'une face d'appui 113A située à l'opposé de la face d'appui 123A du support 100.

Ainsi, le support 100 est avantageusement réversible avec des première et deuxième parties 110, 120 pratiquement identiques.

A cet effet, le support 100 peut être utilisé selon deux orientations à 90° l'une de l'autre. Selon la première orientation (voir figure 1), la première partie 110 du support 100 est dirigée verticalement vers le haut et la deuxième partie 120 du support 100 est dirigée horizontalement et est destinée à recevoir en appui ledit conduit 10. Selon la deuxième orientation (voir figure 2), la première partie 110 du support 100 s'étend horizontalement et joue le rôle de la deuxième partie en étant apte à recevoir en appui ledit conduit 10, et la deuxième partie 120 du support 100 s'étend verticalement vers le bas et joue le rôle de la première partie en étant destinée à être fixée à la paroi de fixation du support 100.

La fixation de la deuxième partie 120 à la paroi est réalisée au moyen d'organes d'ancrage (non représentés) traversant les trous allongés 124 et s'ancrant dans ladite paroi.

Les évidements 112 prévus dans les portions cambrées 111 de la première partie 110 sont des encoches à contour ouvert pour la portion cambrée 111 située à droite sur la figure 2 et sont des ouvertures à contour fermé pour la portion cambrée 111 située à gauche sur la figure 2.

En outre, selon le mode de réalisation du dispositif de fixation représenté sur les figures 1 et 2, les moyens de verrouillage 200 comprennent ici une épingle 210 en forme de U dont les branches 210A, 210B sont aptes à être engagées longitudinalement dans les canaux C parallèles définis à l'intérieur des portions cambrées 121, 111 des deuxième et première parties 120, 110 du support 100.

Les moyens de verrouillage 200 comprennent également un élément de blocage 211 apte à bloquer ledit élément de verrouillage 210 en translation selon l'axe longitudinal X des canaux C lorsque celui-ci est engagé dans ceux-ci.

Cet élément de blocage est ici une languette 211, rabattable par pliage, qui s'étend en saillie à partir de chaque bord d'extrémité des première et deuxième parties 110, 120 du support 100 selon l'axe longitudinal X des canaux C.

Ainsi, le positionnement et le verrouillage du conduit 10 de cheminement de câbles constitué d'un treillis de fils soudés sur le support 100 représenté sur la figure 1 sont réalisés de la manière suivante.

Le conduit 10 de cheminement de câbles est placé par l'installateur sur la deuxième partie 120 du support 100 de sorte que les fils longitudinaux 10A formant le fond 11 du conduit 10 s'engagent dans les évidements 122 des portions cambrées 121 de manière que le fond 11 dudit conduit 10 prend appui sur la face d'appui 123A de la deuxième partie 120.

Puis, l'installateur, de façon simple et rapide, engage longitudinalement les branches 210A, 210B de l'épingle 210 dans les canaux C parallèles de la deuxième partie 120 pour les intercaler entre les fils longitudinaux 10A du conduit 10 et les pattes cambrées 121A de la deuxième partie 120 du support 100.

Le conduit 10 de cheminement de câbles est alors bloqué dans les évidements 122 de la deuxième partie 120 du support 100.

Pour éviter que l'épingle 210 sorte des canaux C, la languette 211 située sur le bord d'extrémité de la deuxième partie 120 du support 100 est rabattue par pliage sur la base 210C de l'épingle 210.

De manière similaire, pour positionner et verrouiller le conduit 10 de cheminement de câbles en treillis de fils soudés sur le support 100 représenté sur la figure 2, l'installateur introduit les fils longitudinaux 10A constituant le fond 11 de ce conduit 10 dans les évidements 112 des portions cambrées 111 de la première partie 110 de façon que le fond 11 du conduit 10 repose sur la face d'appui 113A de la première partie 110.

Puis, l'installateur introduit les branches 210A, 210B de l'épingle 210 dans les canaux C de la première partie 110, selon l'axe longitudinal X de ces canaux, de façon à les intercaler entre les fils longitudinaux 10A du conduit 10 et les pattes cambrées 111A.

Enfin, il rabat par pliage la languette 211 sur la base 210C de l'épingle 210 pour bloquer tout mouvement longitudinal de l'épingle 210.

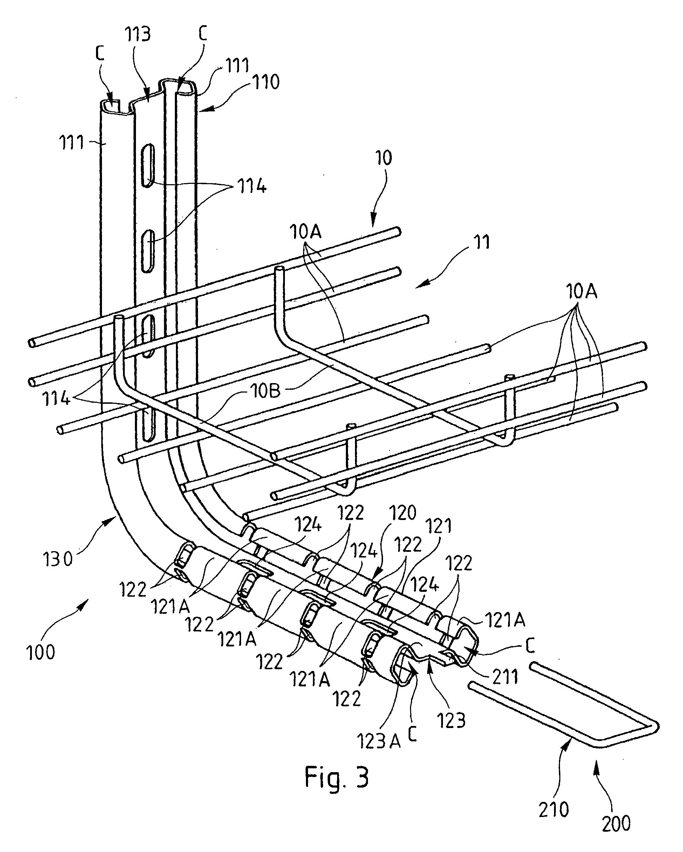

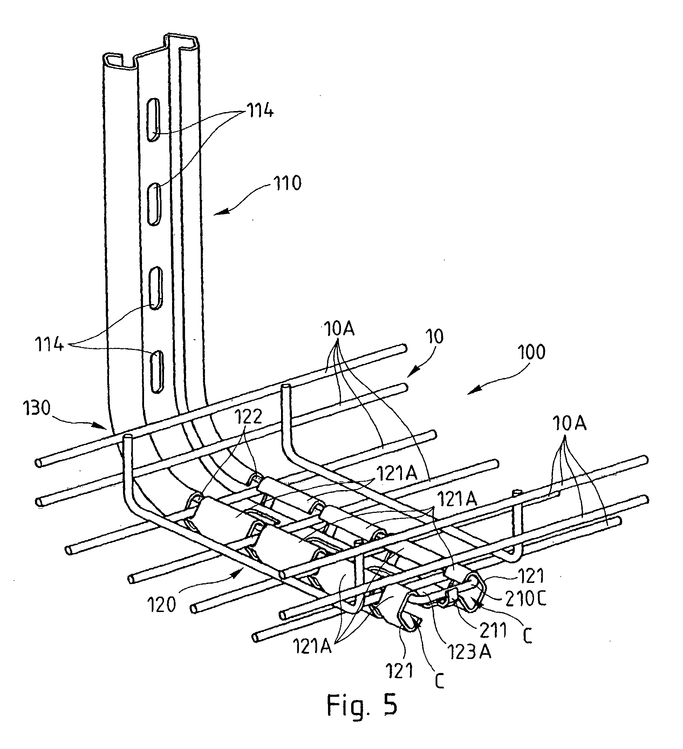

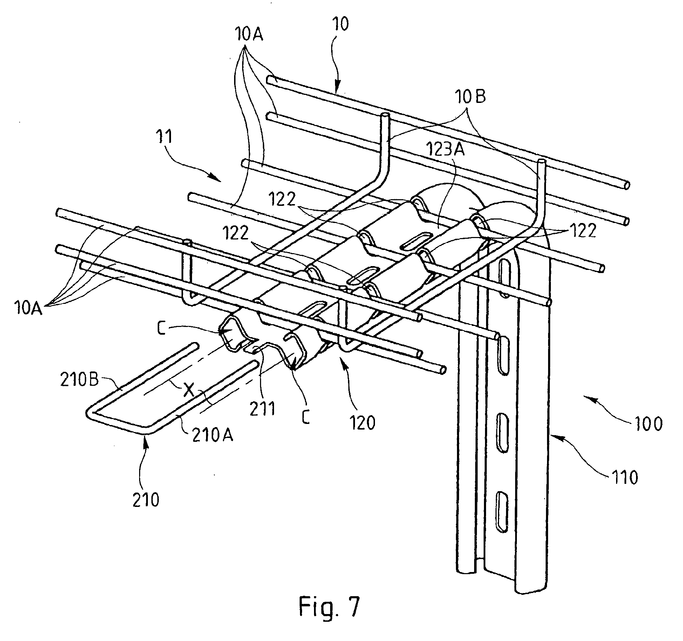

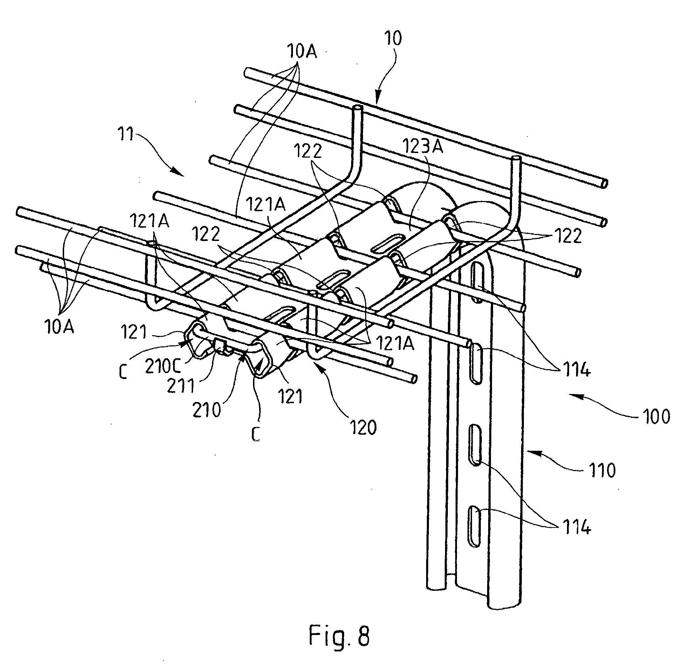

Sur les figures 3 à 8, on a représenté une variante de réalisation du dispositif de fixation selon l'invention, selon laquelle les portions cambrées 111 de la première partie 110 du support 100 ne comportent pas d'évidement.

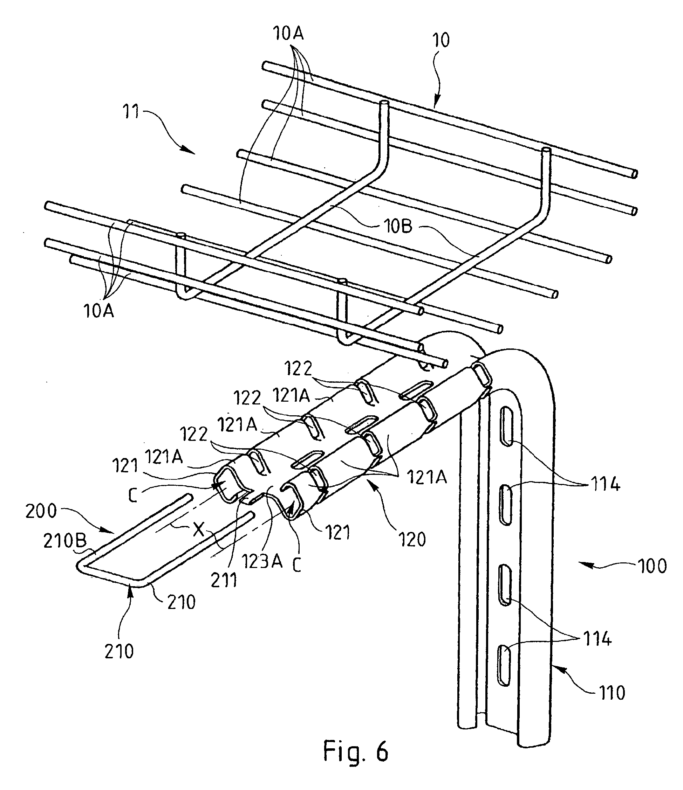

Selon cette variante, chaque portion cambrée 121 de la deuxième partie 120 du support 100 comporte, d'une part, une première série d'évidements 122 échelonnés sur la longueur de ladite portion cambrée 121, disposés d'un côté dudit support et définissant entre eux des pattes cambrées 121A qui s'élèvent au-dessus d'une face d'appui 123A de la deuxième partie 120 (voir figure 3), et, d'autre part, une deuxième série d'évidements 122 échelonnés sur la longueur de ladite portion cambrée 121, disposés d'un autre côté opposé dudit support et définissant entre eux des pattes cambrées 121A qui s'élèvent au-dessus d'une autre face d'appui 123A opposée du support 100 (voir figure 6).

Les évidements 122 de la deuxième série sont en regard des évidements 122 de la première série. Les évidements 122 des première et seconde séries sont soit des ouvertures ou lumières à contour fermé soit des encoches à contour ouvert qui peuvent être réalisées par découpage ou poinçonnage de la matière constituant le support 100.

Comme le montrent plus particulièrement les figures 3 et 6, le support 100 peut également prendre deux positions différentes en étant pivoté à 90° d'une position à l'autre.

Toutefois, contrairement au mode de réalisation représenté sur les figures 1 et 2, la deuxième partie 120 et la première partie 110 du support 100 ne jouent pas ici un rôle similaire mais, dans chacune des deux positions du support 100, on utilise les deux faces d'appui 123A de la deuxième partie 120 du support 100, la première partie 110 restant la partie à fixer à la paroi considérée non représentée.

Comme le montrent les figures 3 à 8, pour fixer le conduit 10 de cheminement de câbles sur le support 100, l'installateur introduit les fils longitudinaux 10A constituant le fond 11 du conduit 10 dans les évidements 122 de la deuxième partie 120 de façon à placer le fond 11 du conduit 10 contre la face d'appui 123A correspondante, et bloquer le conduit 10 selon l'axe longitudinal des canaux C définis à l'intérieur des portions cambrées 121. Puis, il introduit l'épingle 210 longitudinalement à l'intérieur des canaux C de façon à intercaler les branches 210A, 210B de l'épingle 210 entre les fils longitudinaux 10A du conduit 10 et les pattes cambrées 121A de la deuxième partie 120 et bloquer ainsi le conduit 10 sur le support 100.

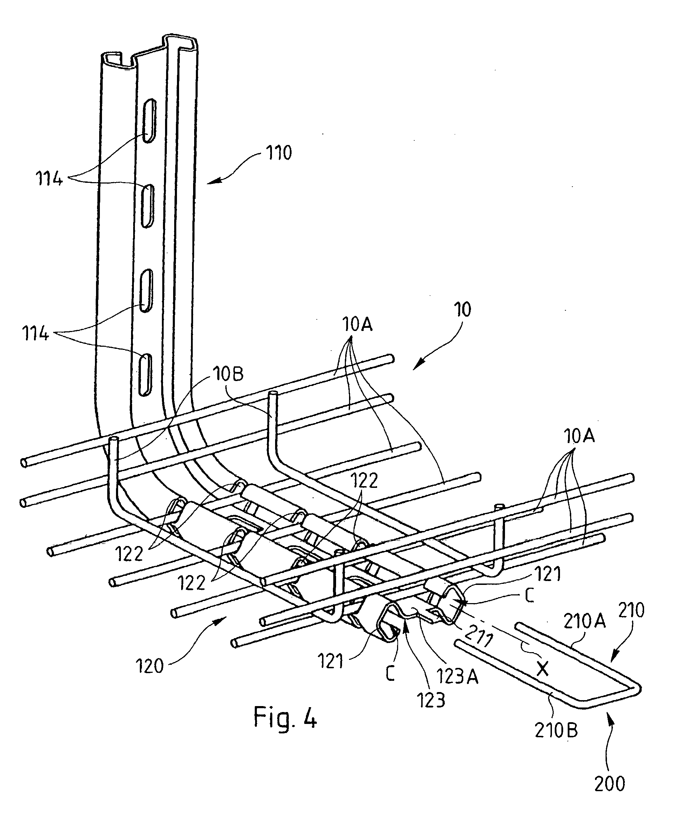

Enfin, il rabat la languette 211 sur l'épingle 210 pour la verrouiller dans les canaux C (voir figure 4, 5, 6, 7 et 8).

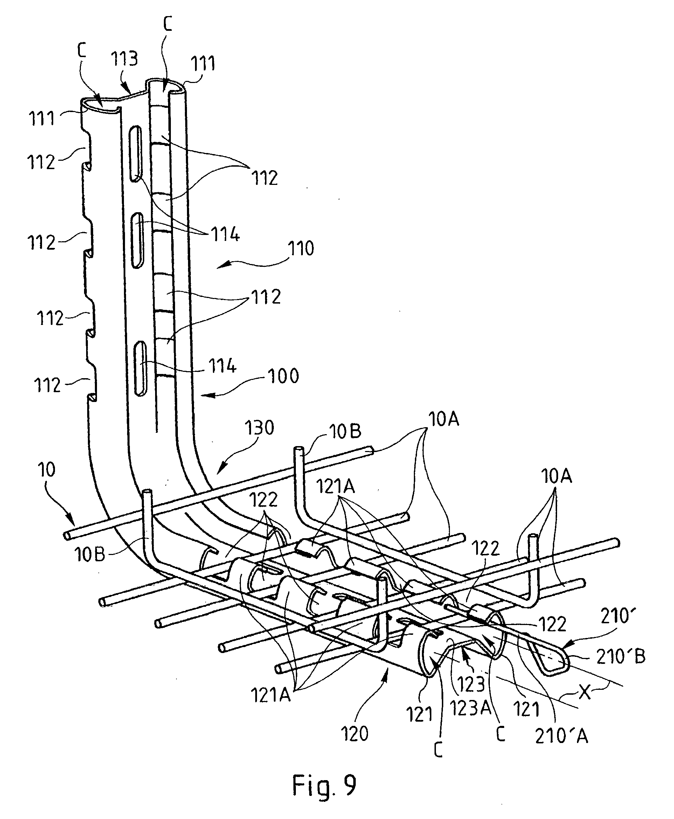

Sur les figures 9 à 15, on a représenté une variante de réalisation du support 100 du dispositif de fixation représenté sur la figure 1 selon laquelle les deux bords longitudinaux du support 100 sont cambrés en direction d'un même côté de ce support 100 de sorte que lesdites portions cambrées 121, 111 ainsi formées sur les bords longitudinaux des deuxième et première parties 120, 110 dudit support 100 s'ouvrent de ce côté dudit support.

Chaque portion cambrée 121, 111 de chaque deuxième et première partie 120, 110 du support 100 comporte une série d'évidements 122, 112. Les évidements 122 des portions cambrées 121 de la deuxième partie 120 sont des encoches à contour ouvert tandis que les évidements 112 réalisés dans les portions cambrées 111 de la première partie 110 sont des ouvertures à contour fermé qui s'ouvrent à l'opposé des encoches prévues dans les portions cambrées 121 de la deuxième partie 120 de sorte que les faces d'appui 123A, 113A des deuxième et première parties 120, 110 sont opposées.

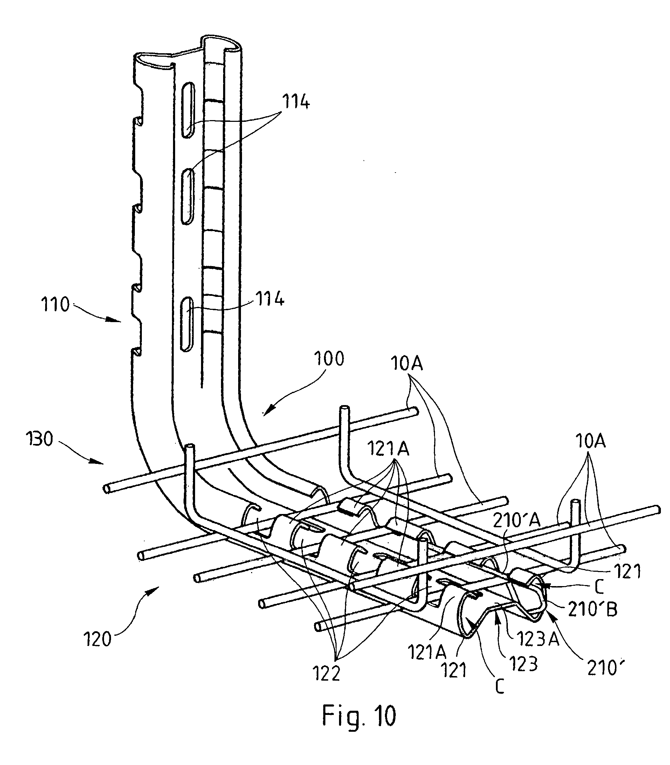

Selon les modes de réalisation du dispositif de fixation représentés sur les figures 9 à 15, les moyens de verrouillage 200' comprennent une clé 210' avec un corps 210'A allongé et une tête 210'B. Le corps 210'A de la clé 210' est apte à être engagé longitudinalement dans un canal C pour l'intercaler entre les fils longitudinaux 10A du fond 11 du conduit 10 et lesdites pattes cambrées 121A ou 111A du support 100. La tête 210'B de la clé 210' est apte à se coincer élastiquement dans le canal C correspondant (voir figures 10, 12 et 15).

Globalement, la tête 210'B de la clé 210' présente une forme de crochet.

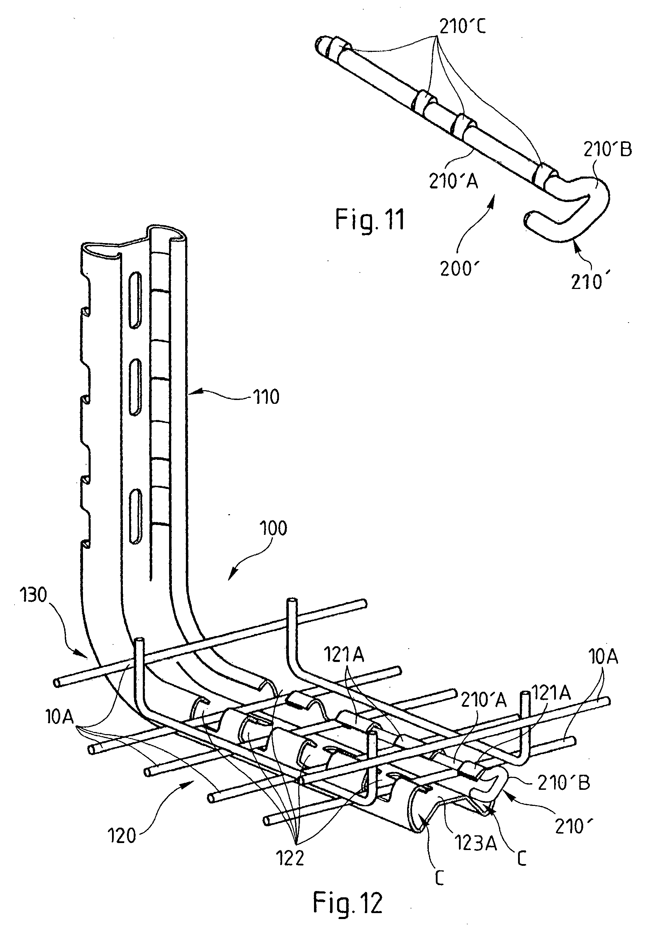

Selon les modes de réalisation du dispositif de fixation représentés sur les figures 11, 12 et 14, 15, le corps 210'A de la clé 210' comporte des aménagements 210'C pour exercer une force d'appui sur le fond 11 du conduit 10 lors du coincement de la tête 210'B de la clé 210' par un mouvement de pivotement dans le canal C correspondant du support 100.

Selon le mode de réalisation représenté sur la figure 11, ces aménagements 210'C sont des surfaces de came.

La clé 210' est alors introduite longitudinalement dans le canal C correspondant du support 100 de façon que son corps 210'A allongé soit intercalé entre les fils longitudinaux 10A constituant le fond 11 du conduit 10 et les pattes cambrées 121A ou 111A correspondantes du support 100. Puis cette clé 210' est pivotée d'un quart de tour de manière que les surfaces de came 210'C portées par le corps 210'A de ladite clé 210' prennent appui sur les fils longitudinaux 10A et les plaquent au fond des évidements 122 ou 112 pour bloquer le fond 11 du conduit 10 en appui contre la face d'appui 123A ou 113A de la deuxième ou la première partie 120, 110 du support 100.

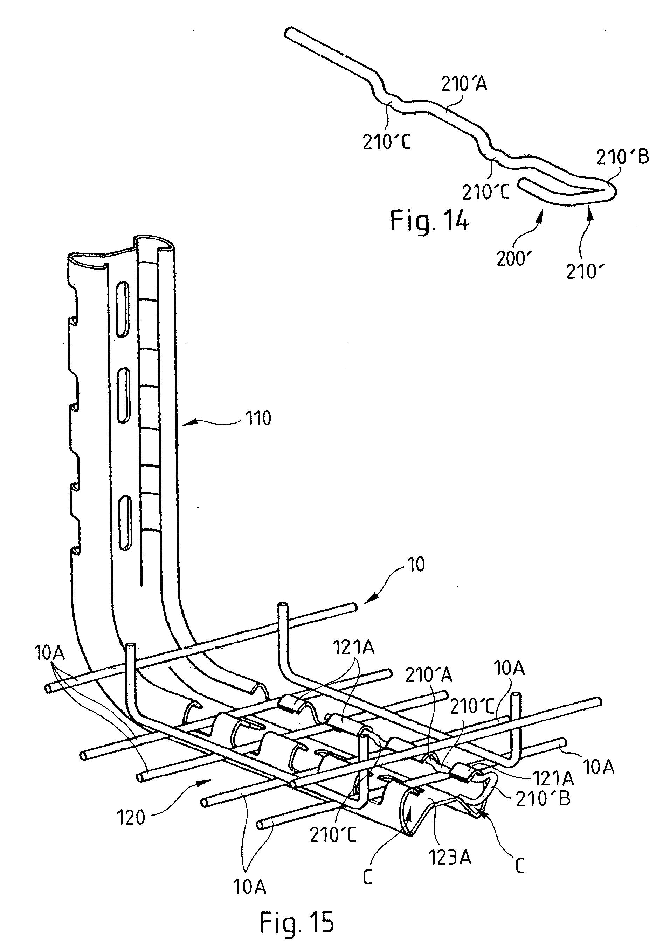

Selon le mode de réalisation représenté sur les figures 14 et 15, les aménagements 210'C de la clé 210' sont des bossages qui agissent de manière identique aux surfaces de came décrites précédemment.

La clé 210' pourvue de bossages est introduite longitudinalement dans le canal C correspondant du support 100 de façon à être intercalée entre le fond 11 du conduit 10 et les pattes cambrées 121A ou 111A correspondantes du support 100. Puis, la clé 210' est pivotée d'un quart de tour environ de façon que les bossages 210'C prennent appui contre les fils longitudinaux 10A correspondants du fond 11 du conduit 10 pour les plaquer dans le fond des évidements 122 ou 112 correspondants.

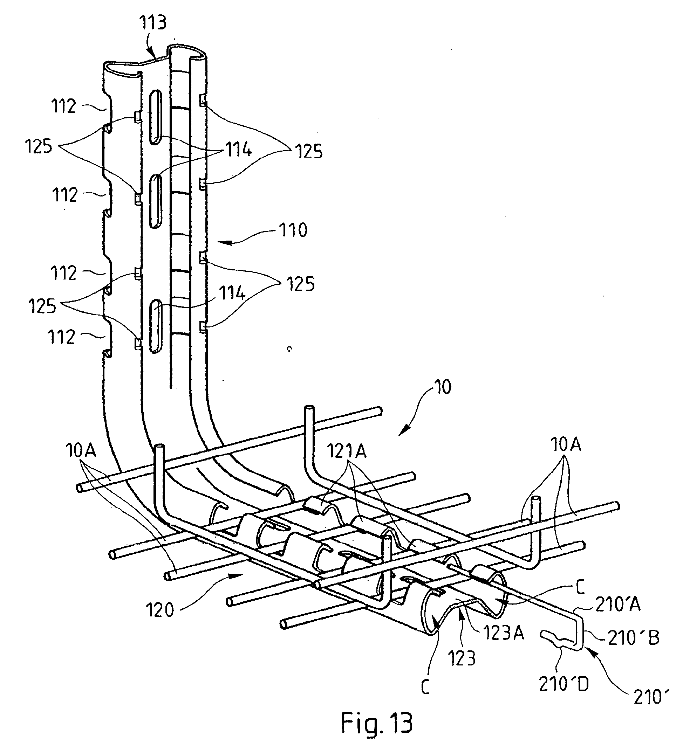

Selon le mode de réalisation du dispositif de fixation représenté sur la figure 13, la tête 210'B de la clé 210' comporte un bossage 210'D destiné à venir se verrouiller dans un crevé 125 prévu dans la portion cambrée 121 ou 111 correspondante du support 100 lorsque la clé 210' est introduite longitudinalement dans le canal C correspondant du support 100.

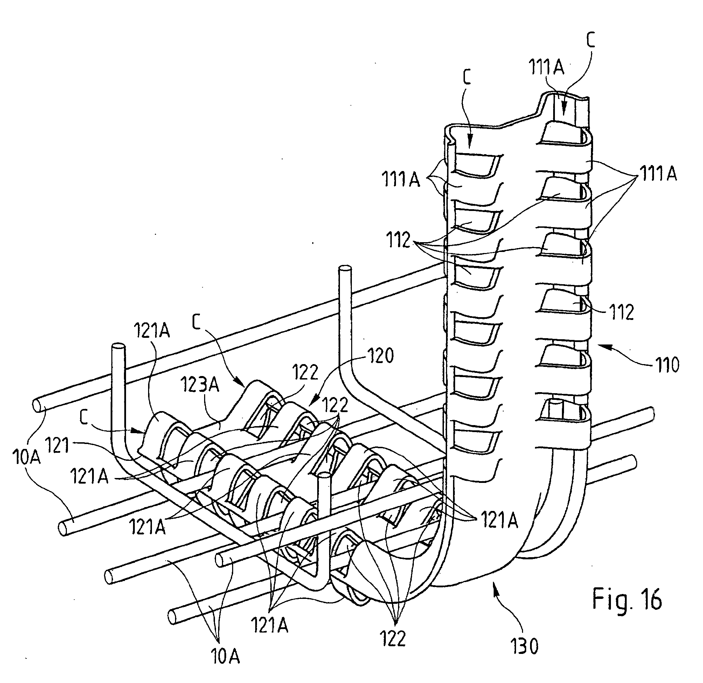

Sur les figures 16 à 21, on a représenté un autre mode de réalisation du support 100 du dispositif de fixation selon l'invention. Ce mode de réalisation se rapproche de celui représenté sur la figure 9 puisque les bords longitudinaux du support 100 réalisé d'une seule pièce sont cambrés en direction d'un même côté du support de façon à former des portions cambrées 121, 111 qui s'ouvrent d'un même côté du support 100.

Toutefois, ici, la formation des évidements 122, 112 prévus dans les portions cambrées 121, 111 pour définir les pattes cambrées 121 A, 111A est réalisée différemment.

En effet, ces évidements 122, 112 sont réalisés par découpage et emboutissage de parties des portions cambrées 121, 111 correspondantes de façon à former d'un côté du support 100 une première série de vagues ou bossages échelonnés en longueur et de l'autre côté du support 100 une seconde série de vagues échelonnées en longueur décalées par rapport aux vagues ou bossages de la première série.

Ces vagues ou bossages sont les pattes cambrées 121A, 111A des deuxième et première parties 120, 110 du support 100.

Globalement, les pattes cambrées 121A, 111A alternées forment les canaux C d'introduction de l'élément de verrouillage.

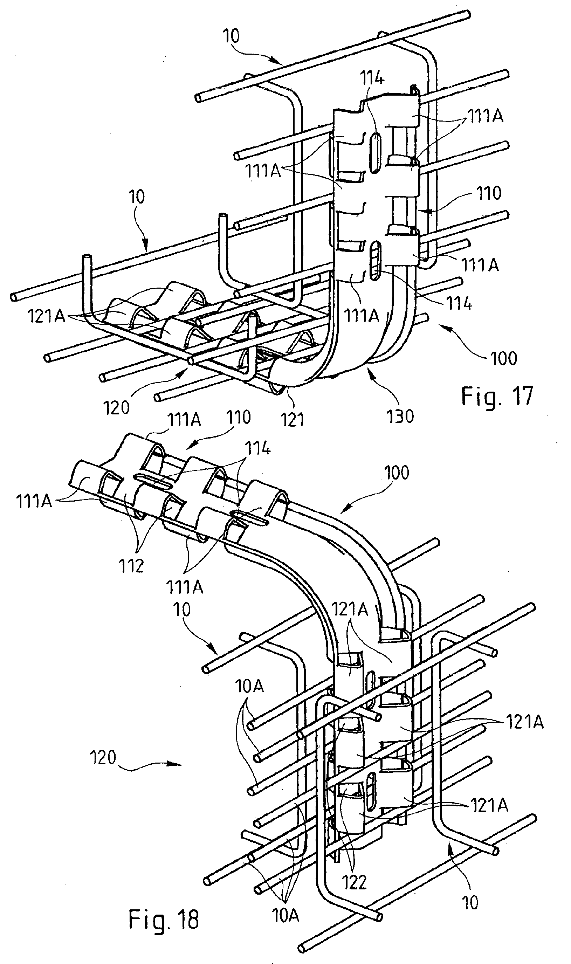

Les évidements 122, 112 peuvent être plus ou moins larges, comme le montrent les figures 16 et 17 par exemple, pour permettre un positionnement plus ou moins aisé des différents types de conduits 10, 10'.

Comme le montrent les figures 17 à 20, le support 100 du dispositif de fixation selon l'invention permet de supporter, sur sa première et deuxième partie 110, 120, des conduits 10 de cheminement de câbles réalisés en treillis de fils soudés.

En particulier, sur la figure 17, l'installateur utilise les première et deuxième parties 110, 120 du support 100 pour supporter deux conduits 10 de cheminement de câbles identiques, bien que la première partie 110 du support 100 serve également de partie de fixation à la paroi non représentée.

Sur la figure 18, l'installateur utilise les deux faces de la deuxième partie 120 du support 100 pour supporter deux conduits 10 de cheminement de câbles de treillis de fils soudés.

Dans ce cas, il utilise un élément de verrouillage pour chaque conduit 10, chaque élément de verrouillage étant introduit dans un canal C différent de la deuxième partie du support 100.

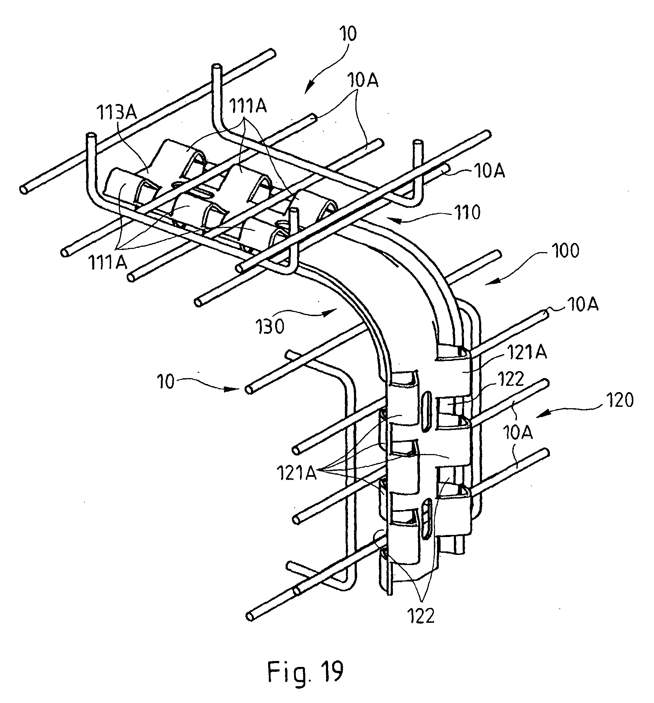

Sur la figure 19, l'installateur utilise une face d'appui 113A, 123A de chaque première et deuxième partie 110, 120 du support 100 pour positionner un conduit 10 de cheminement de câbles.

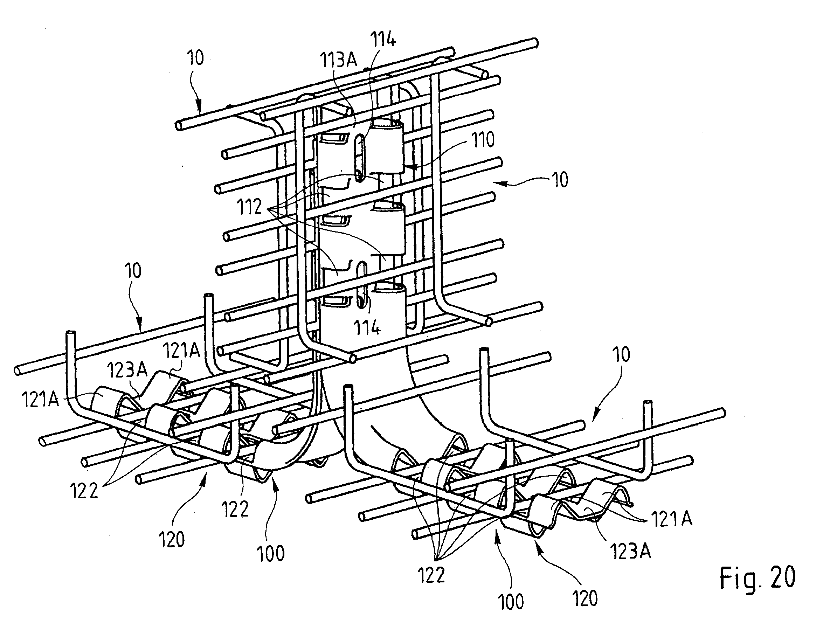

Sur la figure 20, l'installateur a accolé deux supports 100 identiques pour positionner sur chacune des faces d'appui 123A de chaque deuxième partie 120 de chaque support 100 un conduit 10 de cheminement de câbles en treillis de fils soudés. En outre, l'accolement des deux supports 100 se faisant par une face d'appui 113A des premières parties 110 des supports 100, l'utilisateur utilise l'autre face d'appui 113A de ces première parties 110 pour positionner deux conduits 10 de cheminement de câbles en treillis de fils soudés.

Ici aussi, l'installateur utilise deux éléments de verrouillage pour verrouiller les deux conduits 10 sur les premières parties 110 des supports 100 accolés, chaque élément de verrouillage étant introduit dans un canal C correspondant de la première partie 110 de chaque support 100.

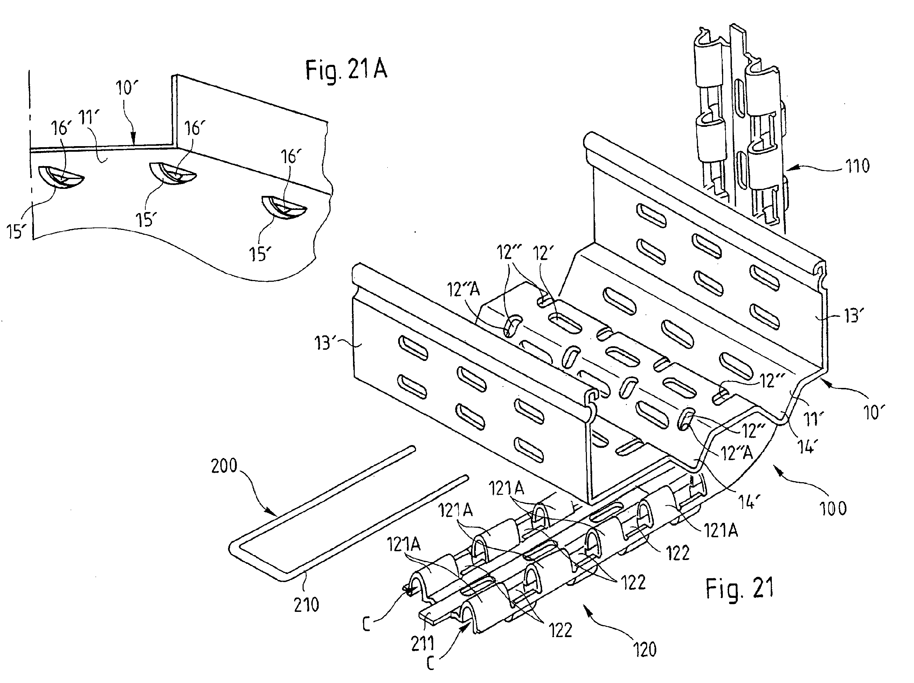

Avantageusement, comme le montre la figure 21, le dispositif de fixation, selon l'invention, qui vient d'être décrit, peut être utilisé pour supporter un conduit 10' de cheminement de câbles réalisé en tôle ou en matière plastique avec un fond 11' plein pourvu d'ouvertures oblongues 12', 12" et des parois latérales 13' pleines pourvues également d'ouvertures oblongues et portant en tête des moyens de montage d'un couvercle non représenté.

Comme le montre la figure 21, l'élément de verrouillage reste ici une épingle 210 introduite dans les canaux C formés à l'intérieur des portions cambrées 121 prévues sur les bords longitudinaux de la deuxième partie 120 du support 100.

Le conduit 10', spécialement adapté au montage sur le support 100, comporte dans son fond 11' au moins une rainure 14' s'étendant selon l'axe longitudinal du conduit 10' (ici deux rainures 14' parallèles). Ces rainures 14' sont destinées à s'engager dans des évidements 122 formés dans les portions cambrées 121 de la deuxième partie 120 du support 100 de façon à prendre appui sur la face d'appui 123A de la deuxième partie 120. Le reste du fond 11' du conduit prend appui sur les crêtes des pattes cambrées 121A de la deuxième partie 120 du support 100.

Lorsque le conduit 10' est ainsi positionné sur la deuxième partie 120 du support 100 du dispositif de fixation, l'installateur n'a plus qu'à engager, longitudinalement, dans les canaux C définis à l'intérieur des portions cambrées 121, les branches 210A, 210B de l'épingle 210 de façon qu'elles traversent des ouvertures oblongues 12" prévues dans le fond 11' du conduit 10' et qu'elles s'intercalent entre ce fond 11' et les pattes cambrées 121A correspondantes de la deuxième partie 120 du support 100 en prenant appui sur le bord incurvé 12"A desdites ouvertures oblongues 12".

Puis, l'installateur rabat la languette 211 de blocage sur l'épingle 210 pour bloquer celle-ci longitudinalement dans les canaux C de la deuxième partie 120 du support 100.

Sur la figure 21A, on a représenté une variante de réalisation de conduit 10' de cheminement de câbles à parois pleines, spécialement adapté au support 100 de la figure 21, selon laquelle des languettes 15' sont formées dans le fond 11' du conduit 10' en saillie de la face externe dudit fond 11'. Ces languettes 15' sont destinées à être engagées dans des évidements 122 des portions cambrées 121 de la deuxième partie 120 du support 100, lorsque ledit conduit 10' est positionné sur ledit support 100. Les languettes 15' définissent des passages 16' qui s'alignent avec les canaux C, et les branches 210A, 210B de l'épingle 210 introduite dans lesdits canaux C traversent lesdits passages 16' et s'intercalent entre, d'une part, le fond 11' du conduit 10' qui repose sur les crêtes des pattes cambrées 121A, et, d'autre part, lesdites pattes cambrées 121A pour bloquer le conduit 10' sur le support 100.

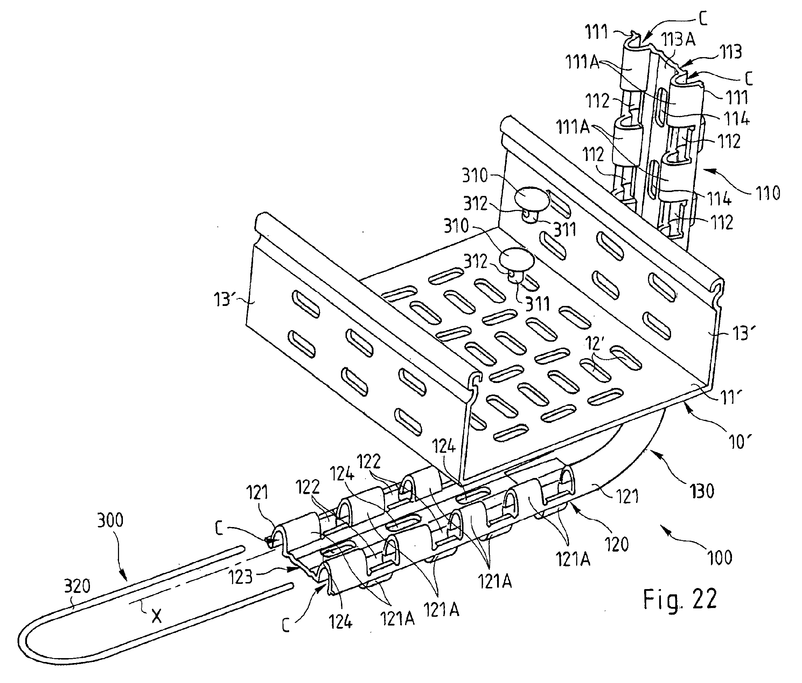

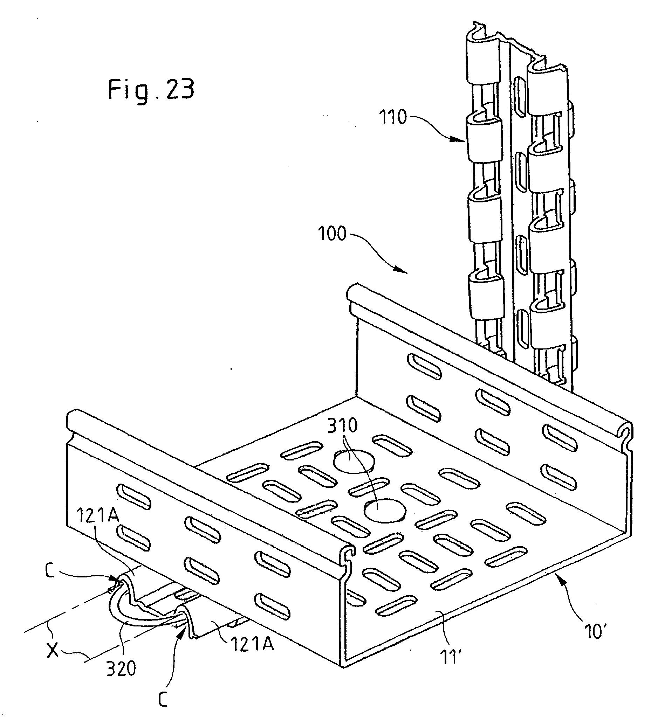

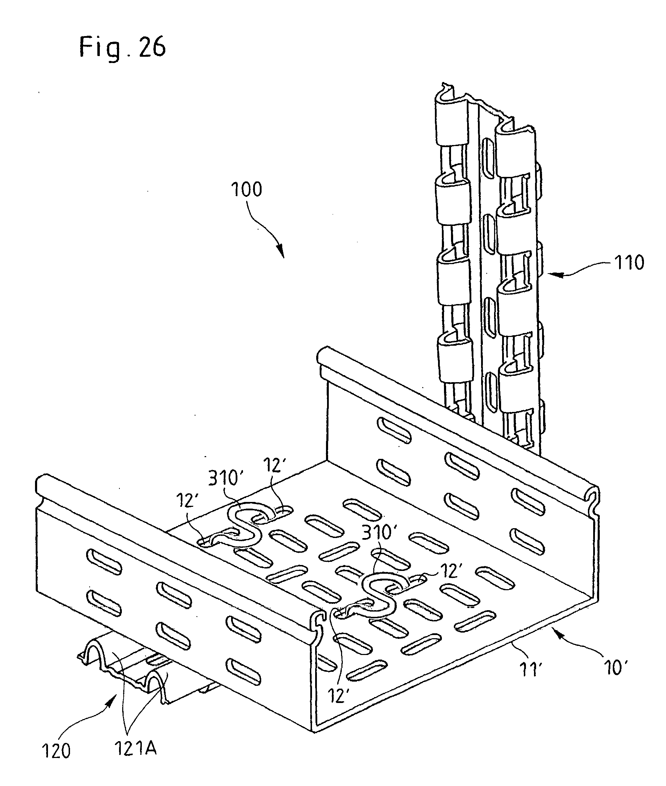

Sur les figures 22 à 29, on a représenté trois autres modes de réalisation du dispositif de fixation selon l'invention, qui comportent un support 100 identique à celui décrit en référence aux figures 16 à 21. Ces modes de réalisation se distinguent alors par leurs moyens de verrouillage du conduit 10' sur le support 100.

Les modes de réalisation représentés sur les figures 22 à 29 sont particulièrement adaptés à supporter et à maintenir un conduit 10' de cheminement de câbles à parois pleines, dont le fond 11' est perforé d'ouvertures oblongues 12'.

Les ailes 13' du conduit 10' de cheminement de câbles sont également pourvues d'ouvertures 12'.

Ledit conduit 10' peut être réalisé en tôle ou en matière plastique.

De manière générale, ici, les moyens de verrouillage 300 comprennent deux éléments de verrouillage 310 ; 310' ; 310" ; 320, à savoir un premier élément 310 ; 310' ; 310" apte à être positionné, au droit d'un des évidements 122 de la portion cambrée 121 correspondante de la deuxième partie 120 du support 100, selon une première direction Z perpendiculaire à la face 123A de la deuxième partie 120 du support 100, en traversant au moins une ouverture 12' prévue dans le fond 11' dudit conduit 10', et un deuxième élément 320 apte à être engagé dans ledit canal C selon une deuxième direction X ; Y parallèle à ladite face 123A de la deuxième partie 120 du support 100 de manière à coopérer avec ledit premier élément 310 ; 310' ; 310" en prenant en sandwich le fond 11 dudit conduit 10 qui prend appui sur les crêtes des pattes cambrées 121A de la deuxième partie 120 du support 100 pour bloquer le conduit 10' sur le support 100.

Préférentiellement, la coopération des premier et deuxième éléments se fait par coulissement, mais dans une autre variante non représentée on pourrait prévoir qu'elle se fait par encliquetage.

Ici, le deuxième élément est une épingle 320 en forme de U.

Selon le mode de réalisation représenté sur les figures 22, 23 et 24, le premier élément est un bouton 310 dont le fût 311 comporte une ouverture traversante 312 pour le passage dudit deuxième élément 320.

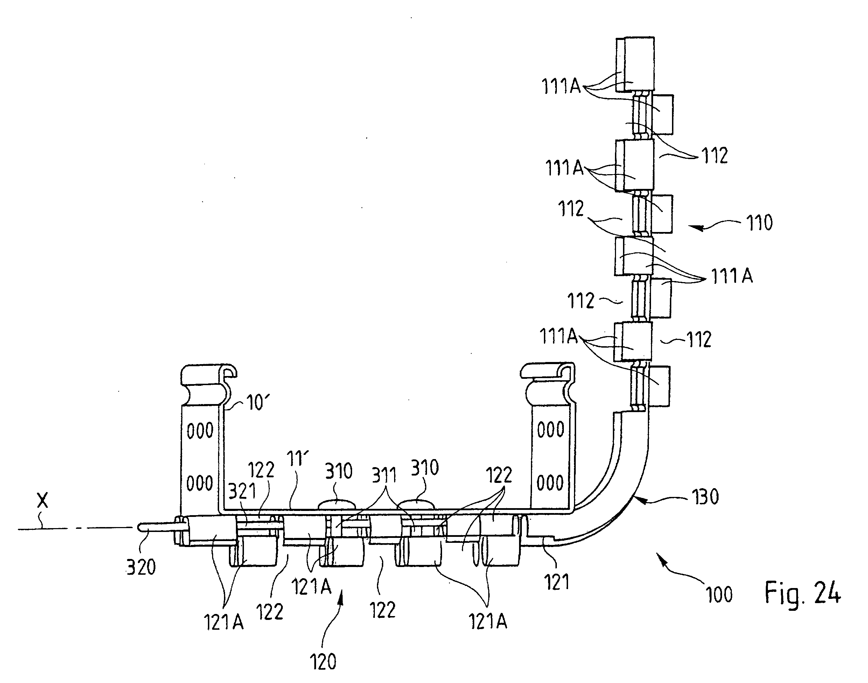

Plus particulièrement, l'installateur utilise deux boutons 310 et introduit le fût 311 de chacun de ces boutons 310 au travers d'une ouverture 12' prévue dans le fond 11' du conduit 10' pour l'engager selon la direction Z dans le canal C correspondant par un évidement 122 (voir figure 24).

Dans la position représentée sur la figure 24, le fond 11' du conduit 10' de cheminement de câbles repose sur les crêtes des pattes cambrées 121A de la deuxième partie 120 du support 100. L'épingle 320 en forme de U est introduite longitudinalement (direction X) dans les canaux C parallèles pour que ses branches parallèles coulissent au travers des ouvertures 312 prévues dans les fûts 311 des boutons 310.

Comme le montre la figure 24, le fond 11' du conduit 10' qui prend appui sur les crêtes des pattes cambrées 121A de la deuxième partie 120 du support 100 est pris en sandwich entre les têtes des boutons 310 et les branches parallèles de l'épingle 320 qui sont en appui sur les pattes cambrées 121A correspondantes.

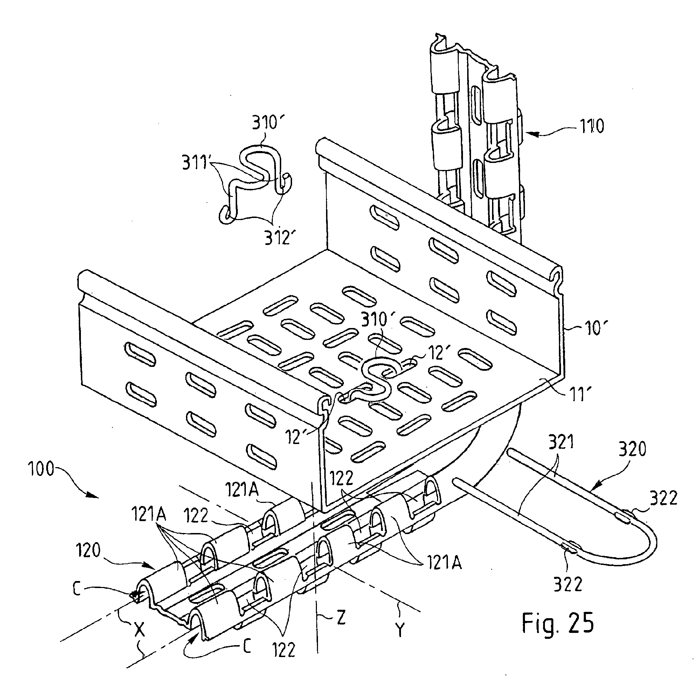

Selon le mode de réalisation du dispositif de fixation représenté sur les figures 25 à 27, le deuxième élément est une épingle 320 en forme de U et le premier élément est un cavalier 310' réalisé en fils dont les branches 311' parallèles forment, à leurs extrémités 312', des ouvertures de passage dudit deuxième élément 320.

Ici, l'épingle 320 en forme de U est introduite dans chacun des canaux C parallèles de la deuxième partie 120 selon une direction Y transversale à l'axe longitudinal des canaux C.

Pour fixer le conduit 10' au support 100, l'installateur positionne dans le fond 11' du conduit 10' deux cavaliers 310' en introduisant les branches 311' respectives des cavaliers 310' au travers d'ouvertures 12' prévues dans le fond 11'.

Puis, il positionne le conduit 10' sur les crêtes des pattes cambrées 121A de la deuxième partie 120 du support 100 de sorte que les branches 311' des cavaliers 310' se positionnent selon la direction Z de part et d'autre de la deuxième partie 120 au droit d'évidements 122 correspondants situés en dessous des pattes cambrées 121 A supportant le fond 11' dudit conduit 10'.

L'installateur introduit ensuite l'épingle 320 suivant la direction Y dans les canaux C parallèles de la deuxième partie 120 traversant lesdits évidements 122 correspondants de manière que l'épingle 320 prend appui sur la face 123A inférieure du support 100.

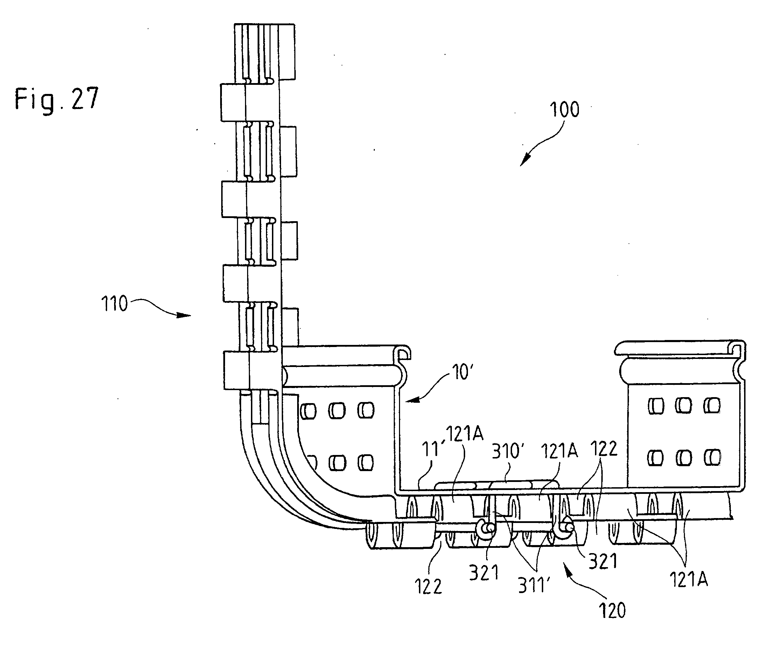

Les branches 321 de l'épingle 320 coulissent au travers des ouvertures 312' prévues aux extrémités des branches 311' des cavaliers 310' (voir figure 27). De cette manière, l'épingle 320 est liée aux cavaliers 310' et bloque le conduit 10' de cheminement de câbles sur le support 100.

De façon avantageuse, les branches 321 de l'épingle 320 comportent des ailettes de blocage 322 aptes à verrouiller l'épingle 320 dans les cavaliers 310'.

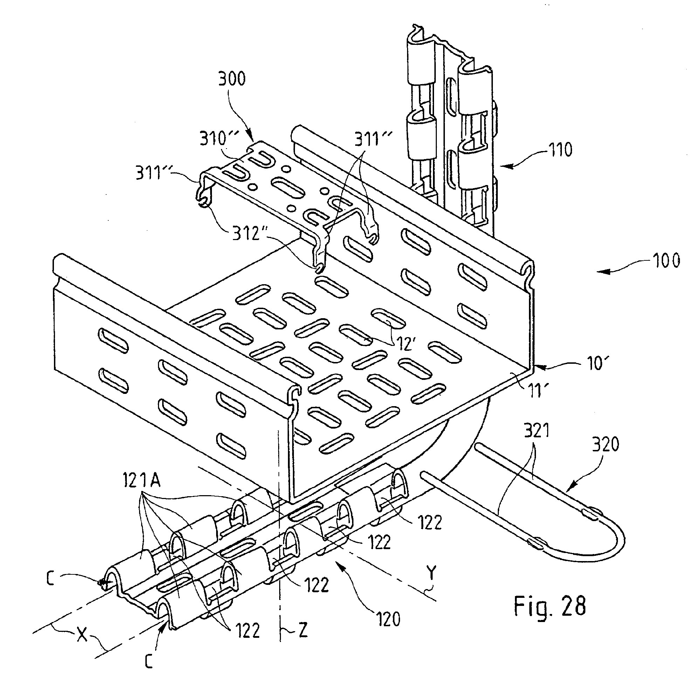

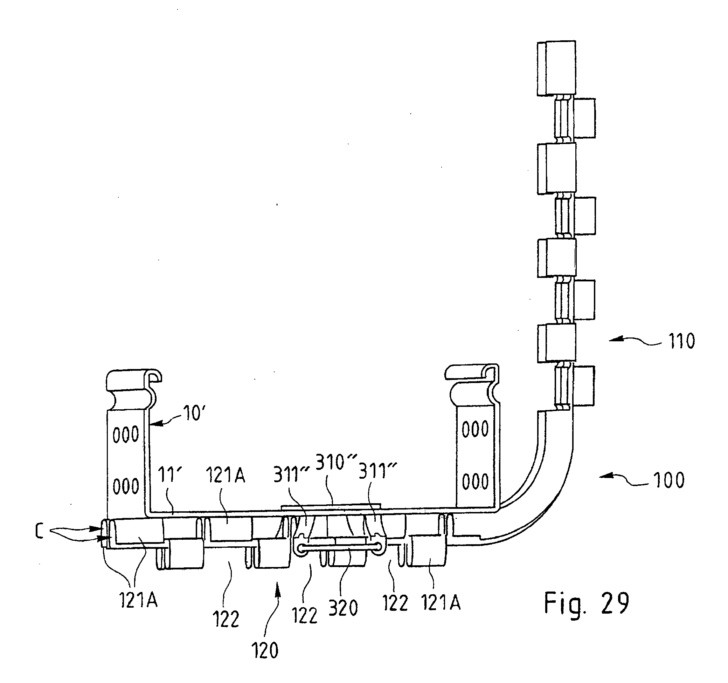

Le mode de réalisation représenté sur les figures 28 et 29 est similaire à celui représenté sur les figures 25 à 27.

Ici, le cavalier 310" n'est pas un cavalier en fils, mais est constitué d'une plaque qui porte perpendiculairement, à ses quatre coins, des branches 311".

Chacune des quatre branches 311" est conformée à son extrémité en forme de crochet définissant une ouverture 312" de passage des branches 321 de l'épingle 320 constituant le deuxième élément des moyens de verrouillage 300.

L'installateur doit ici introduire les quatre branches 311" du cavalier 310" au travers de quatre ouvertures 12' prévues dans le fond 11' du conduit 10' de cheminement de câbles. Puis, il positionne ces branches 311" selon la direction Z de part et d'autre de la deuxième partie 120 du support 100 de la même manière que les branches 311' du cavalier 310' en fils.

L'épingle 320 est alors engagée au travers des canaux C correspondants de la deuxième partie 120 du support 100 selon la direction Y par les évidements 122, et elle traverse les ouvertures 312" prévues aux extrémités des branches 311" du cavalier 310".

L'épingle 320 comporte également des ailettes de blocage permettant de la verrouiller dans le cavalier 310".

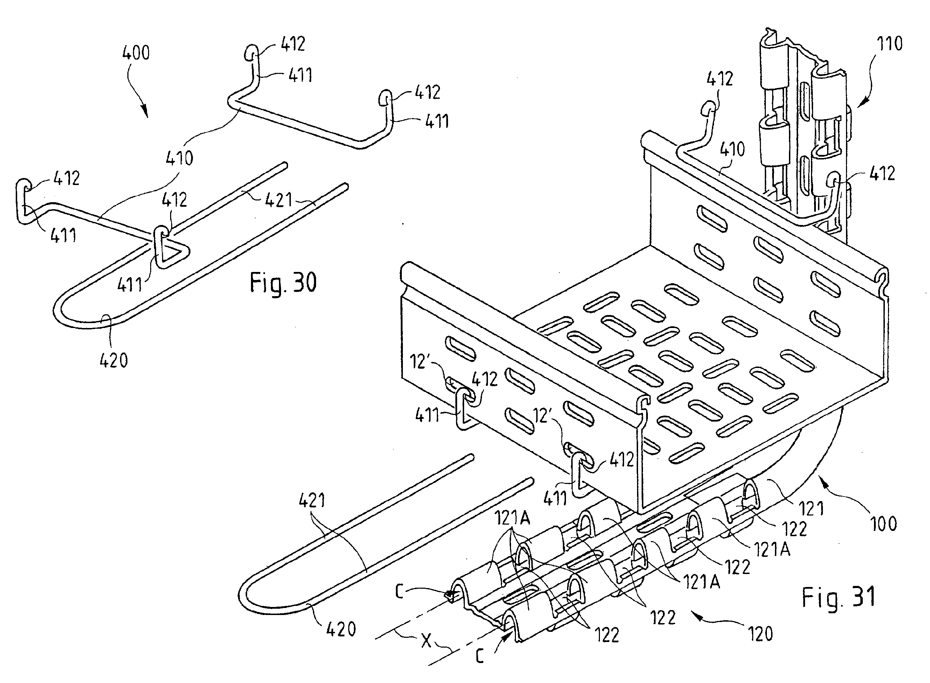

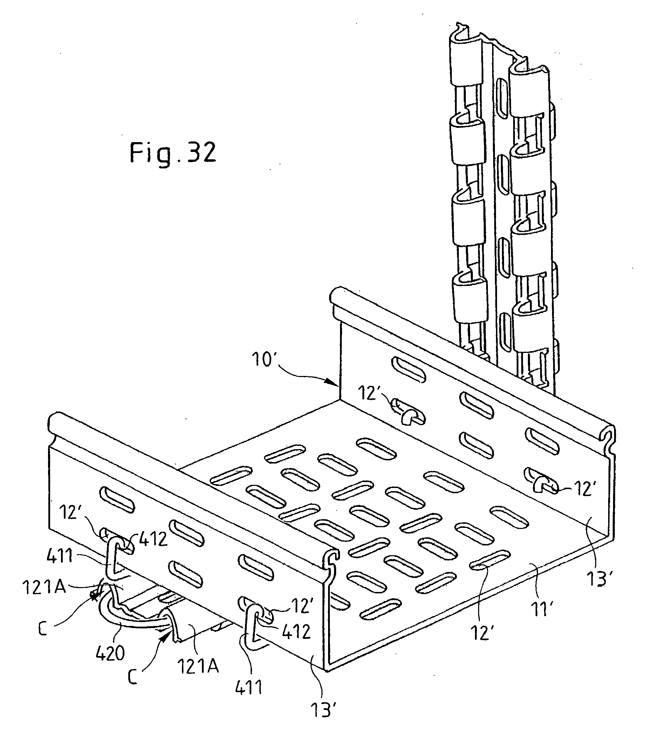

Sur les figures 31 et 32, on a représenté un autre mode de réalisation du dispositif de fixation selon l'invention utilisant un support 100 identique à celui des modes de réalisation représentés sur les figures 22 à 29.

Selon le mode de réalisation, les moyens de verrouillage 400 comprennent, comme le montre la figure 30, deux éléments de verrouillage 410, 420, à savoir un premier élément 410 apte à s'accrocher audit conduit 10' et à être engagé, par un évidement 122, transversalement dans le canal C correspondant du support 100 en étant parallèle à la face 123A de la deuxième partie 120 dudit support 100, le fond 11' du conduit 10' prenant également appui sur la crête desdites pattes cambrées 121A, et un deuxième élément 420 apte à être engagé longitudinalement dans le canal C pour l'intercaler entre lesdites pattes cambrées 121A et ledit premier élément 410 et bloquer ledit conduit 10' sur ledit support 100.

Le premier élément est une agrafe 410 et le deuxième élément est une épingle 420 en forme de U.

Plus particulièrement, il est prévu deux agrafes 410 et une épingle 420 en forme de U.

Chaque agrafe 410 est réalisée en fils avec, à chaque extrémité de son âme principale, deux pattes 411 relevées qui sont recourbées en forme de crochets 412.

La mise en place du conduit 10' sur le support 100 est alors réalisée de la manière suivante.

L'installateur accroche à chaque paroi latérale 13' du conduit 10' une agrafe 410 de sorte que l'âme de chaque agrafe s'étend en dessous du fond 11' du conduit 10' parallèlement à celui-ci. Puis, il pose le conduit 10' sur la deuxième partie 120 du support 100 de telle sorte que l'âme de chaque agrafe 410 s'engage par deux évidements 122 situés sur la même ligne de niveau, transversalement dans ledit canal C, en étant parallèle à la face 123A de la portion centrale plane 123 s'étendant entre les deux canaux C de la deuxième partie 120 du support 100.

Dans cette position, le fond 11' du conduit 10' de cheminement de câbles prend appui sur les crêtes des pattes cambrées 121A de la deuxième partie 120 du support 100.

Puis, de façon rapide et simple, l'installateur introduit longitudinalement les branches 421 de l'épingle 420 dans les canaux C parallèles de la deuxième partie 120 de sorte que les branches 421 s'intercalent entre le fond 11' du conduit 10' et les agrafes 410.

Dans cette position, les agrafes 410 sont liées à l'épingle 420 et le conduit 10' est bloqué sur le support. Pour éviter une extraction de l'épingle 420 des canaux C, il est préférable que la deuxième partie 120 du support 100 comporte à son extrémité une languette rabattable sur l'épingle. Une telle languette n'est pas représentée sur les figures 31 et 32.

Bien entendu, selon les modes de réalisation représentés sur les figures 22 à 32, le support 100 est réversible, et la première partie 110 de ce support 100 peut être utilisée en tant que deuxième partie apte à recevoir le conduit 10' de cheminement de câbles à fixer.

## Revendications

1. Dispositif de fixation à une paroi d'un conduit (10) de cheminement de câbles, comprenant, d'une part, un support (100) pourvu d'une première partie (110) à fixer à ladite paroi et d'une deuxième partie (120) apte à recevoir en appui ledit conduit (10), et, d'autre part, des moyens de verrouillage (200) assurant la fixation dudit conduit (10) audit support (100), **caractérisé en ce que** ladite deuxième partie (120) dudit support (100) comprend au moins une portion cambrée (121) qui définit intérieurement un canal (C), cette portion cambrée (121) étant ajourée par des évidements (122) espacés les uns des autres suivant la longueur de ladite portion cambrée (121) et définissant entre eux des pattes cambrées (121A) qui s'élèvent au-dessus d'une face d'appui (123A) de ladite deuxième partie (120) du support (100), et **en ce que** lesdits moyens de verrouillage (200 ; 200') comprennent un élément de verrouillage (210 ; 210') destiné à être engagé longitudinalement dans ledit canal (C) pour l'intercaler entre le fond (11) dudit conduit (10), qui prend appui sur ladite face d'appui (123A) de ladite deuxième partie (120) du support (100) en s'engageant dans au moins certains évidements (122) de ladite portion cambrée (121), et au moins deux desdites pattes cambrées (121A) pour bloquer ledit conduit sur ledit support.

2. Dispositif de fixation selon la revendication 1, **caractérisé en ce que** ledit élément de verrouillage est une épingle (210) en forme de U dont au moins une des branches (210A, 210B) est apte à s'engager dans ledit canal (C).

3. Dispositif de fixation selon la revendication 2, **caractérisé en ce que** lesdits moyens de verrouillage (200) comprennent un élément de blocage (211) apte à bloquer ledit élément de verrouillage (210) en translation selon l'axe longitudinal (X) dudit canal (C) lorsque celui-ci est engagé dans ledit canal (C).

4. Dispositif de fixation selon la revendication 3, **caractérisé en ce que** l'élément de blocage est une languette (211), rabattable par pliage, qui s'étend en saillie à partir d'un bord d'extrémité de ladite deuxième partie (120) du support (100) selon l'axe longitudinal (X) dudit canal (C).

5. Dispositif de fixation selon la revendication 1, **caractérisé en ce que** ledit élément de verrouillage est une clé (210') avec un corps (210'A) allongé et une tête (210'B), le corps (210'A) de la clé (210') étant apte à être engagé longitudinalement dans le canal (C) pour l'intercaler entre le fond (11) du conduit (10) et lesdites pattes cambrées (121A) du support (100), et la tête (210'B) de la clé (210') étant apte à se coincer élastiquement dans ledit canal (C).

6. Dispositif de fixation selon la revendication 5, **caractérisé en ce que** le corps (210'A) de la clé (210') comporte des aménagements (210'C) pour exercer une force d'appui sur le fond (11) du conduit (10) lors du coincement de la tête (210'B) de la clé (210') dans ledit canal (C).

7. Dispositif de fixation selon la revendication 6, **caractérisé en ce que** lesdits aménagements (210'C) sont des surfaces de came.

8. Dispositif de fixation selon la revendication 6, **caractérisé en ce que** lesdits aménagements (210'C) sont des bossages.

9. Dispositif de fixation selon l'une des revendications 5 à 8, **caractérisé en ce que** la tête (210'B) de la clé (210') comporte un bossage (210'D) apte à se verrouiller dans un crevé (125) prévu dans la portion cambrée (121) dudit support (100).

10. Dispositif de fxation selon l'une des revendications 5 à 9, **caractérisé en ce que** la tête (210'B) de la clé (210') présente une forme de crochet.

11. Dispositif de fixation à une paroi d'un conduit (10') de cheminement de câbles présentant un fond (11') pourvu d'ouvertures (12'), ledit dispositif de fixation comprenant, d'une part, un support (100) pourvu d'une première partie (110) à fixer à ladite paroi et d'une deuxième partie (120) apte à recevoir en appui ledit conduit (10'), et, d'autre part, des moyens de verrouillage (300) assurant la fixation dudit conduit (10') audit support (100), **caractérisé en ce que** ladite deuxième partie (120) dudit support (100) comprend au moins une portion cambrée (121) qui définit intérieurement un canal (C), cette portion cambrée (121) étant ajourée par des évidements (122) espacés les uns des autres suivant la longueur de ladite portion cambrée (121) et définissant entre eux des pattes cambrées (121A) qui s'élèvent au-dessus d'une face (123A) de ladite deuxième partie (120) du support (100), et **en ce que** lesdits moyens de verrouillage (300) comprennent deux éléments de verrouillage (310 ; 310' ; 310", 320), à savoir un premier élément (310 ; 310' ; 310") apte à être positionné, au droit d'un desdits évidements (122) de ladite portion cambrée (121), selon une première direction (Z) perpendiculaire à ladite face (123A) de ladite deuxième partie (120) dudit support (100), en traversant au moins une ouverture (12') prévue dans le fond (11') dudit conduit (10'), et un deuxième élément (320) apte à être engagé dans ledit canal (C) selon une deuxième direction (X ; Y) parallèle à ladite face (123A) de la deuxième partie (120) dudit support (100) de manière à coopérer avec ledit premier élément (310 ; 310' ; 310") en prenant en sandwich le fond (11') dudit conduit (10') qui prend appui sur les crêtes desdites pattes cambrées (121A) pour bloquer ledit conduit (10') sur ledit support (100).

12. Dispositif de fixation selon la revendication 11, **caractérisé en ce que** ladite deuxième direction est la direction (X) de l'axe longitudinal dudit canal (C).

13. Dispositif de fixation selon la revendication 11, **caractérisé en ce que** ladite deuxième direction est une direction (Y) transversale à l'axe longitudinal dudit canal (C).

14. Dispositif de fixation selon l'une des revendications 11 à 13, **caractérisé en ce que** le deuxième élément est une épingle (320) en forme de U.

15. Dispositif de fixation selon l'une des revendications 11 à 14, **caractérisé en ce que** le premier élément est un bouton (310) dont le fût (311) comporte une ouverture traversante (312) pour le passage dudit deuxième élément (320).

16. Dispositif de fixation selon l'une des revendications 11 à 14, **caractérisé en ce que** le premier élément est un cavalier (310' ; 310") dont les branches (311' ; 311") forment, à leurs extrémités (312' ; 312"), des ouvertures de passage dudit deuxième élément (320).

17. Dispositif de fixation selon l'une des revendications 11 à 16, **caractérisé en ce que** ledit deuxième élément (320) porte des moyens de blocage (322) aptes à le verrouiller en position dans ledit premier élément (310 ; 310' ; 310")

18. Dispositif de fixation à une paroi d'un conduit (10') de cheminement de câbles présentant un fond (11') pourvu d'ouvertures (12'), ledit dispositif de fixation comprenant, d'une part, un support (100) pourvu d'une première partie (110) à fixer à ladite paroi et d'une deuxième partie (120) apte à recevoir en appui ledit conduit (10'), et, d'autre part, des moyens de verrouillage (400) assurant la fixation dudit conduit (10') audit support (100), **caractérisé en ce que** ladite deuxième partie (120) dudit support (100) comprend au moins une portion cambrée (121) qui définit intérieurement un canal (C), cette portion cambrée (121) étant ajourée par des évidements (122) espacés les uns des autres suivant la longueur de ladite portion cambrée (121) et définissant entre eux des pattes cambrées (121A) qui s'élèvent au-dessus d'une face (123A) de ladite deuxième partie (120) du support (100), et **en ce que** lesdits moyens de verrouillage (400) comprennent deux éléments de verrouillage (410, 420), à savoir un premier élément (410) apte à s'accrocher audit conduit (10') et à être engagé, par un évidement (122), transversalement dans ledit canal (C) en étant parallèle à ladite face (123A) de la deuxième partie (120) dudit support (100), le fond (11') dudit conduit (10') prenant appui sur les crêtes desdites pattes cambrées (121A), et un deuxième élément (420) apte à être engagé longitudinalement dans ledit canal (C) pour l'intercaler entre lesdites pattes cambrées (121A) et ledit premier élément (410) et bloquer ledit conduit (10') sur ledit support (100).

19. Dispositif de fixation selon la revendication 18, **caractérisé en ce que** ledit premier élément est une agrafe (410) et ledit deuxième élément est une épingle (420) en forme de U.

20. Dispositif de fixation selon l'une des revendications 1 à 19, **caractérisé en ce que** ladite deuxième partie (120) du support (100) comporte, sur ses deux bords longitudinaux, deux portions cambrées (121) ajourées d'évidements (122) échelonnés sur la longueur desdites portions cambrées (121), les évidements (122) situés d'un même côté dudit support (100) étant deux à deux placés sur une même ligne de niveau.

21. Dispositif de fixation selon la revendication 20, **caractérisé en ce que** ladite deuxième partie (120) comporte une portion centrale plane (123) s'étendant entre ses deux portions cambrées (121).

22. Dispositif de fixation selon la revendication 21, **caractérisé en ce que** ladite portion centrale plane (123) comporte une série de trous allongés (124) échelonnés sur la longueur de ladite deuxième partie (120).

23. Dispositif de fixation selon l'une des revendications 1 à 22, **caractérisé en ce que** chaque portion cambrée (121) de ladite deuxième partie comporte, d'une part, une première série d'évidements (122) échelonnés sur la longueur de ladite portion cambrée (121), disposés d'un côté dudit support et définissant entre eux des pattes cambrées (121A), et, d'autre part, une deuxième série d'évidements (122) échelonnés sur la longueur de ladite portion cambrée (121), disposés d'un autre côté opposé dudit support et définissant entre eux des pattes cambrées (121A).

24. Dispositif de fixation selon la revendication 23, **caractérisé en ce que** les évidements (122) de la deuxième série sont décalés par rapport aux évidements (122) de la première série.

25. Dispositif de fixation selon la revendication 23, **caractérisé en ce que** les évidements (122) de la deuxième série sont en regard des évidements (122) de la première série.

26. Dispositif de fixation selon l'une des revendications 1 à 25, **caractérisé en ce que** la première partie (110) dudit support (100) se raccorde continûment à la deuxième partie (120) par une portion coudée (130) de sorte que ledit support (100) présente la forme d'une équerre.

27. Dispositif selon l'une des revendications 1 à 26, **caractérisé en ce que** la première partie (110) dudit support (100) comporte une portion centrale plane (113) pourvue d'une série de trous allongés (114) échelonnés suivant la longueur de ladite première partie (110).

28. Dispositif de fixation selon l'une des revendications 26 ou 27, **caractérisé en ce que** la première partie (110) dudit support (100) comporte, également, dans le prolongement de chaque portion cambrée (121) de ladite deuxième partie (120), une portion cambrée (111).

29. Dispositif de fixation selon la revendication 28, **caractérisé en ce que** ladite première partie (110) du support (100) comporte, sur ses deux bords longitudinaux, deux portions cambrées (111) définissant chacune intérieurement un canal (C), séparées l'une de l'autre par une portion centrale plane (113) ajourée de trous allongés (114) échelonnés sur la longueur de ladite première partie (110).

30. Dispositif de fixation selon l'une des revendications 28 ou 29, **caractérisé en ce que** chaque portion cambrée (111) de ladite première partie (110) dudit support (100) est ajourée par des évidements (112) espacés les uns des autres suivant la longueur de ladite portion cambrée (111) et définissant entre eux des pattes cambrées (111 A) qui s'élèvent au-dessus d'une face (113A) de ladite première partie (110) de sorte que ledit support (100) est réversible avec des première et deuxième parties (110, 120) identiques ou similaires.

31. Dispositif de fixation selon l'une des revendications 1 à 30, **caractérisé en ce que** ledit support (100) est réalisé d'une seule pièce en tôle.

32. Dispositif de fixation selon l'une des revendications 1 à 30, **caractérisé en ce que** ledit support (100) est réalisé d'une seule pièce par moulage d'une matière plastique.

33. Dispositif de fixation selon l'une des revendications 28 à 32, **caractérisé en ce que** les deux bords longitudinaux dudit support sont cambrés pour former deux portions cambrées (121, 111) parallèles à section ouverte.

34. Dispositif de fixation selon la revendication 33, **caractérisé en ce qu'**un desdits bords longitudinaux est cambré en direction d'un côté dudit support (100) de sorte que ladite portion cambrée (121, 111) ainsi formée s'ouvre dudit côté dudit support (100) tandis que l'autre desdits bords longitudinaux est cambré en direction de l'autre côté opposé dudit support (100) de sorte que ladite portion cambrée (121, 111) ainsi formée s'ouvre de l'autre côté opposé dudit support (100).

35. Dispositif de fixation selon la revendication 33, **caractérisé en ce que** les deux bords longitudinaux dudit support (100) sont cambrés en direction d'un même côté du support (100) de sorte que lesdites portions cambrées (121, 111) ainsi formées s'ouvrent de ce côté dudit support.

36. Dispositif de fixation selon l'une des revendications 1 à 35, **caractérisé en ce que** les évidements (122, 112) formés dans chaque portion cambrée (121, 111) sont des ouvertures découpées à contour fermé.

37. Dispositif de fixation selon l'une des revendications 1 à 35, **caractérisé en ce que** les évidements (122, 112) formés dans chaque portion cambrée sont des encoches découpées à contour ouvert.

38. Dispositif de fixation selon l'une des revendications 1 à 35, **caractérisé en ce que** les évidements (122, 112) formés dans chaque portion cambrée (121, 111) sont réalisés par découpage et emboutissage des parties de la portion cambrée (121, 111).

## Patentansprüche

1. Vorrichtung zum Befestigen eines Kabelführungskanals (10) an einer Wand mit einerseits einem Träger (100), der mit einem an der Wand zu befestigenden ersten Teil (110) und einem zweiten Teil (120), der den Kabelkanal (10) aufliegend aufzunehmen vermag, versehen ist, und andererseits Verriegelungsmitteln (200), die die Befestigung des Kabelkanals (10) am Träger (100) gewährleisten,
**dadurch gekennzeichnet, dass** der zweite Teil (120) des Trägers (100) wenigstens ein gewölbtes Stück (121) aufweist, das innen eine Rinne (C) bildet, wobei dieses gewölbte Stück (121) von Aussparungen (122) durchbrochen ist, die in der Länge des gewölbten Stücks (121) voneinander beabstandet sind und zwischen einander gewölbte Laschen (121 A) bilden, die sich über einer Auflagefläche (123A) des zweiten Teils (120) des Trägers (100) erheben, und dass die Verriegelungsmittel (200; 200') ein Verriegelungsorgan (210; 210') umfassen, das dazu bestimmt ist, längs in die Rinne (C) eingeführt zu werden, um es zwischen dem Boden (11) des Kabelkanals (10), der an der Auflagefläche (123A) des zweiten Teils (120) des Trägers (100) aufliegt und dabei in wenigstens einige der Aussparungen (122) des gewölbten Stücks (121) eingeführt ist, und wenigstens zwei der gewölbten Laschen (121 A) einzufügen, um den Kabelkanal auf dem Träger festzuklemmen.

2. Befestigungsvorrichtung nach Anspruch 1,
**dadurch gekennzeichnet, dass** das Verriegelungsorgan eine U-förmige Nadel (210) ist, von der wenigstens ein Schenkel (210A, 210B) in die Rinne (C) eingeführt werden kann.

3. Befestigungsvorrichtung nach Anspruch 2,
**dadurch gekennzeichnet, dass** die Verriegelungsmittel (200) ein Klemmorgan (211) umfassen, das das Verriegelungsorgan (210) translatorisch entlang der Längsachse (X) der Rinne (C) festzuklemmen vermag, wenn dieses in die Rinne (C) eingeführt ist.

4. Befestigungsvorrichtung nach Anspruch 3,
**dadurch gekennzeichnet, dass** das Klemmorgan eine durch Biegen umklappbare Zunge (211) ist, die sich an einem äußeren Rand des zweiten Teils (120) des Trägers (100) vorstehend entlang der Längsachse (X) der Rinne (C) erstreckt.

5. Befestigungsvorrichtung nach Anspruch 1,
**dadurch gekennzeichnet, dass** das Verriegelungsorgan ein Schlüssel (210') mit einem länglichen Körper (210'A) und einem Kopf (210'B) ist, wobei der Körper (210'A) des Schlüssels (210') längs in die Rinne (C) eingeführt zu werden vermag, um diesen zwischen dem Boden (11) des Kabelkanals (10) und den gewölbten Laschen (121A) des Trägers einzufügen, und wobei der Kopf (210'B) des Schlüssels (210') elastisch in die Rinne (C) geklemmt zu werden vermag.

6. Befestigungsvorrichtung nach Anspruch 5,
**dadurch gekennzeichnet, dass** der Körper (210'A) des Schlüssels (210') Einrichtungen (210'C) aufweist, um beim Einklemmen des Kopfes (210'B) des Schlüssels (210') in der Rinne (C) eine Auflagekraft auf den Boden (11) des Kabelkanals (10) auszuüben.

7. Befestigungsvorrichtung nach Anspruch 6,
**dadurch gekennzeichnet, dass** es sich bei den Einrichtungen (210'C) um Nockenflächen handelt.

8. Befestigungsvorrichtung nach Anspruch 6,
**dadurch gekennzeichnet, dass** es sich bei den Einrichtungen (210'C) um Vorwölbungen handelt.

9. Befestigungsvorrichtung nach einem der Ansprüche 5 bis 8,
**dadurch gekennzeichnet, dass** der Kopf (210'B) des Schlüssels (210') eine Vorwölbung (210'D) aufweist, die in einem in dem gewölbten Stück (121) vorgesehenen Einschnitt (125) einzurasten vermag.

10. Befestigungsvorrichtung nach einem der Ansprüche 5 bis 9,
**dadurch gekennzeichnet, dass** der Kopf (210'B) des Schlüssels (210') die Form eines Hakens hat.

11. Vorrichtung zum Befestigen eines Kabelführungskanals (10') an einer Wand, der einen mit Öffnungen (12') versehenen Boden (11') aufweist, wobei die Befestigungsvorrichtung einerseits einen Träger (100), der mit einem an der Wand zu befestigenden ersten Teil (110) und einem zweiten Teil (120), der den Kabelkanal (10') aufliegend aufzunehmen vermag, versehen ist, und andererseits Verriegelungsmittel (300) umfasst, die die Befestigung des Kabelkanals (10') am Träger (100) gewährleisten,
**dadurch gekennzeichnet, dass** der zweite Teil (120) des Trägers (100) wenigstens ein gewölbtes Stück (121) aufweist, das innen eine Rinne (C) bildet, wobei dieses gewölbte Stück (121) von Aussparungen (122) durchbrochen ist, die in der Länge des gewölbten Stücks (121) voneinander beabstandet sind und zwischen einander gewölbte Laschen (121A) bilden, die sich über einer Fläche (123A) des zweiten Teils (120) des Trägers (100) erheben, und dass die Verriegelungsmittel (300) zwei Verriegelungsorgane (310; 310'; 310"; 320) umfassen, nämlich ein erstes Organ (310, 310'; 310"), das rechtwinklig zu einer der Aussparungen (122) des gewölbten Stücks (121) in einer ersten Richtung (Z) senkrecht zur Fläche (123A) des zweiten Teils (120) des Trägers (100) positioniert zu werden vermag und dabei wenigstens eine im Boden (11') des Kabelkanals (10') vorgesehene Öffnung (12') durchquert, und ein zweites Organ (320), das in einer zweiten Richtung (X; Y) parallel zur Fläche (123A) des zweiten Teils (120) des Trägers (100) solchermaßen in die Rinne (C) eingeführt zu werden vermag, dass es mit dem ersten Organ (310; 310'; 310") zusammenwirkt und dabei den Boden (11') des Kabelkanals (10'), der auf den Scheiteln der gewölbten Laschen (121A) aufliegt, dazwischen einklemmt, um den Kabelkanal (10') auf dem Träger (100) festzuklemmen.

12. Befestigungsvorrichtung nach Anspruch 11,
**dadurch gekennzeichnet, dass** die zweite Richtung die Richtung (X) der Längsachse der Rinne (C) ist.

13. Befestigungsvorrichtung nach Anspruch 11,
**dadurch gekennzeichnet, dass** die zweite Richtung eine Richtung (Y) quer zur Längsachse der Rinne (C) ist.

14. Befestigungsvorrichtung nach einem der Ansprüche 11 bis 13,
**dadurch gekennzeichnet, dass** das zweite Organ eine U-förmige Nadel (320) ist.

15. Befestigungsvorrichtung nach einem der Ansprüche 11 bis 14,
**dadurch gekennzeichnet, dass** das erste Organ ein Knopf (310) ist, dessen Schaft (311) eine durchgehende Öffnung (312) zum Hindurchführen des zweiten Organs (320) aufweist.

16. Befestigungsvorrichtung nach einem der Ansprüche 11 bis 14,
**dadurch gekennzeichnet, dass** das erste Organ eine Krampe (310'; 310") ist, deren Schenkel (311'; 311") an ihren Enden (312'; 312") Öffnungen zum Hindurchführen des zweiten Organs (320) bilden.

17. Befestigungsvorrichtung nach einem der Ansprüche 11 bis 16,
**dadurch gekennzeichnet, dass** das zweite Organ (320) mit Klemmmitteln (322) versehen ist, die es im ersten Organ (310; 310'; 310") nach dem Anbringen einrasten lassen.

18. Vorrichtung zum Befestigen eines Kabelführungskanals (10') an einer Wand, der einen mit Öffnungen (12') versehenen Boden (11') aufweist, wobei die Befestigungsvorrichtung einerseits einen Träger (100), der mit einem an der Wand zu befestigenden ersten Teil (110) und einem zweiten Teil (120), der den Kabelkanal (10') aufliegend aufzunehmen vermag, versehen ist, und andererseits Verriegelungsmittel (400) umfasst, die die Befestigung des Kabelkanals (10') am Träger (100) gewährleisten,
**dadurch gekennzeichnet, dass** der zweite Teil (120) des Trägers (100) wenigstens ein gewölbtes Stück (121) aufweist, das innen eine Rinne (C) bildet, wobei dieses gewölbte Stück (121) von Aussparungen (122) durchbrochen ist, die in der Länge des gewölbten Stücks (121) voneinander beabstandet sind und zwischen einander gewölbte Laschen (121 A) bilden, die sich über einer Fläche (123A) des zweiten Teils (120) des Trägers (100) erheben, und dass die Verriegelungsmittel (400) zwei Verriegelungsorgane (410; 420) umfassen, nämlich ein erstes Organ (410), das sich am Kabelkanal (10') einzuhaken vermag und durch eine Aussparung (122) quer in die Rinne (C) einführen lässt und dabei parallel zur Fläche (123A) des zweiten Teils (120) des Trägers (100) ist, wobei der Boden (11') des Kabelkanals (10') auf den Scheiteln der gewölbten Laschen (121 A) aufliegt, und ein zweites Organ (420), das längs in die Rinne (C) eingeführt zu werden vermag, um es zwischen den gewölbten Laschen (121A) und dem ersten Organ (410) einzufügen und den Kabelkanal (10') auf dem Träger (100) festzuklemmen.

19. Befestigungsvorrichtung nach Anspruch 18,
**dadurch gekennzeichnet, dass** das erste Organ eine Klammer (410) und das zweite Organ eine U-förmige Nadel (420) ist.

20. Befestigungsvorrichtung nach einem der Ansprüche 1 bis 19,
**dadurch gekennzeichnet, dass** der zweite Teil (120) des Trägers (100) an seinen beiden Längsrändern zwei gewölbte Stücke (121) aufweist, die von Aussparungen (122) durchbrochen sind, die über die Länge der gewölbten Stücke (121) verteilt sind, wobei die auf einer Seite des Trägers (100) liegenden Aussparungen (122) paarweise auf ein und derselben Niveaulinie angeordnet sind.

21. Befestigungsvorrichtung nach Anspruch 20,
**dadurch gekennzeichnet, dass** der zweite Teil (120) ein ebenes Mittelstück (123) aufweist, das sich zwischen seinen beiden gewölbten Stücken (121) erstreckt.

22. Befestigungsvorrichtung nach Anspruch 21,
**dadurch gekennzeichnet, dass** das ebene Mittelstück (123) eine Reihe länglicher Löcher (124) aufweist, die über die Länge des zweiten Teils (120) verteilt sind.

23. Befestigungsvorrichtung nach einem der Ansprüche 1 bis 22,
**dadurch gekennzeichnet, dass** jedes gewölbte Stück (121) des zweiten Teils einerseits eine erste Reihe über die Länge des gewölbten Stücks (121) verteilte Aussparungen (122) aufweist, die auf einer Seite des Trägers angeordnet sind und zwischen einander gewölbte Laschen (121A) bilden, und andererseits eine zweite Reihe über die Länge des gewölbten Stücks (121) verteilte Aussparungen (122) umfasst, die auf einer anderen, entgegengesetzten Seite des Trägers angeordnet sind und zwischen einander gewölbte Laschen (121A) bilden.

24. Befestigungsvorrichtung nach Anspruch 23,
**dadurch gekennzeichnet, dass** die Aussparungen (122) der zweiten Reihe bezüglich den Aussparungen (122) der ersten Reihe versetzt sind.

25. Befestigungsvorrichtung nach Anspruch 23,
**dadurch gekennzeichnet, dass** die Aussparungen (122) der zweiten Reihe den Aussparungen (122) der ersten Reihe gegenüberliegen.

26. Befestigungsvorrichtung nach einem der Ansprüche 1 bis 25,
**dadurch gekennzeichnet, dass** sich der erste Teil (110) des Trägers (100) durch ein gebogenes Stück (130) kontinuierlich an den zweiten Teil (120) anschließt, derart, dass der Träger (100) die Form eines Winkeleisens hat.

27. Befestigungsvorrichtung nach einem der Ansprüche 1 bis 26,
**dadurch gekennzeichnet, dass** der erste Teil (110) des Trägers (100) ein ebenes Mittelstück (113) aufweist, das mit einer Reihe länglicher Löcher (114) versehen ist, die in der Länge des ersten Teils (110) verteilt sind.

28. Befestigungsvorrichtung nach einem der Ansprüche 26 oder 27,
**dadurch gekennzeichnet, dass** der erste Teil (110) des Trägers (100) in der Verlängerung eines jeden gewölbten Stücks (121) des zweiten Teils (120) ebenfalls ein gewölbtes Stück (111) aufweist.

29. Befestigungsvorrichtung nach Anspruch 28,
**dadurch gekennzeichnet, dass** der erste Teil (110) des Trägers (100) an seinen beiden Längsrändern zwei jeweils innen eine Rinne (C) bildende, gewölbte Stücke (111) aufweist, die voneinander durch ein ebenes Mittelstück (113) getrennt sind, das von länglichen Löchern (114) durchbrochen ist, die über die Länge des ersten Teils (110) verteilt sind.

30. Befestigungsvorrichtung nach einem der Ansprüche 28 oder 29,
**dadurch gekennzeichnet, dass** jedes gewölbte Stück (111) des ersten Teils (110) des Trägers (100) von Aussparungen (112) durchbrochen ist, die in der Länge des gewölbten Stücks (111) voneinander beabstandet sind und zwischeneinander gewölbte Laschen (111A) bilden, die sich über einer Fläche (113A) des ersten Teils (110) solchermaßen erheben, dass der Träger (100) mit gleichen oder ähnlichen ersten und zweiten Teilen (110, 120) umkehrbar ist.

31. Befestigungsvorrichtung nach einem der Ansprüche 1 bis 30,
**dadurch gekennzeichnet, dass** der Träger (100) einstückig aus Blech ausgeführt ist.

32. Befestigungsvorrichtung nach einem der Ansprüche 1 bis 30,
**dadurch gekennzeichnet, dass** der Träger (100) einstückig durch Gießen eines Kunststoffs ausgeführt ist.

33. Befestigungsvorrichtung nach einem der Ansprüche 28 bis 32,
**dadurch gekennzeichnet, dass** die beiden Längsränder des Trägers gewölbt sind, um zwei parallele, gewölbte Stücke (121, 111) mit offenem Querschnitt zu bilden.

34. Befestigungsvorrichtung nach Anspruch 33,
**dadurch gekennzeichnet, dass** einer der Längsränder zu einer Seite des Trägers (100) gewölbt ist, derart, dass sich das so gebildete gewölbte Stück (121, 111) an dieser Seite des Trägers (100) öffnet, während der andere Längsrand zur anderen, entgegengesetzten Seite des Trägers (100) gewölbt ist, derart, dass sich das so gebildete gewölbte Stück (121, 111) an der anderen Seite des Trägers (100) öffnet.

35. Befestigungsvorrichtung nach Anspruch 33,
**dadurch gekennzeichnet, dass** die beiden Längsränder des Trägers (100) zu ein und
derselben Seite des Trägers (100) gewölbt sind, derart, dass sich die so gebildeten gewölbten Stücke (121, 111) an dieser Seite des Trägers öffnen.

36. Befestigungsvorrichtung nach einem der Ansprüche 1 bis 35,
**dadurch gekennzeichnet, dass** die in jedem gewölbten Stück (121, 111) gebildeten Aussparungen (122, 112) eingeschnittene Öffnungen mit geschlossenem Umriss sind.

37. Befestigungsvorrichtung nach einem der Ansprüche 1 bis 35,
**dadurch gekennzeichnet, dass** die in jedem gewölbten Stück gebildeten Aussparungen (122, 112) eingeschnittene Nuten mit offenem Umriss sind.

38. Befestigungsvorrichtung nach einem der Ansprüche 1 bis 35,
**dadurch gekennzeichnet, dass** die in jedem gewölbten Stück (121, 111) gebildeten Aussparungen (122, 112) durch Einschneiden und Tiefziehen der Teile des gewölbten Stücks (121, 111) ausgeführt sind.

## Claims

1. Device for fixing a cable-routing duct (10) to a wall, comprising a carrier (100) that is provided with a first part (110) to be fixed to said wall and with a second part (120) that is capable of supporting said duct (10), and locking means (200) for fixing said duct (10) to said carrier (100), **characterised in that** said second part (120) of said carrier (100) comprises at least one cambered portion (121) that defines a channel (C) on the inside thereof, said cambered portion (121) being pierced by apertures (122) that are mutually spaced along the length of said cambered portion (121) and that define therebetween cambered projections (121 A) that protrude above a support face (123A) of said second part (120) of the carrier (100), and **in that** said locking means (200; 200') comprise a locking element (210; 210') that is intended to be longitudinally engaged in said channel (C) for insertion between the base (11) of said duct (10), which is supported on said support face (123A) of said second part (120) of the carrier (100) by engaging in at least some apertures (122) in said cambered portion (121), and at least two of said cambered projections (121 A), in order to immobilise said duct on said carrier.

2. Fixing device according to claim 1, **characterised in that** said locking element is a U-shaped pin (210), at least one of the arms (210A 210B) of which is capable of engaging in said channel (C).

3. Fixing device according to claim 2, **characterised in that** said locking means (200) comprise an immobilisation element (211) that is capable of immobilising said locking element (210) against translation along the longitudinal axis (X) of said channel (C) when said locking element is engaged in said channel (C).

4. Fixing device according to claim 3, **characterised in that** the immobilisation element is a tab (211) that can be folded down by bending and that extends along the longitudinal axis (X) of said channel (C) in a manner projecting from an end edge of said second part (120) of the carrier (100).

5. Fixing device according to claim 1, **characterised in that** said locking element is a key (210') comprising an elongate body (210'A) and a head (210'B), the body (210'A) of the key (210') being capable of being longitudinally engaged in the channel (C) for insertion between the base (11) of the duct (10) and said cambered projections (121 A) of the carrier (100), and the head (210'B) of the key (210') being capable of becoming resiliently wedged in said channel (C).

6. Fixing device according to claim 5, **characterised in that** the body (210'A) of the key (210') comprises fittings (210'C) for exerting a supporting force on the base (11) of the duct (10) while the head (210'B) of the key (210') is being wedged in said channel (C).

7. Fixing device according to claim 6, **characterised in that** said fittings (210'C) are cam surfaces.

8. Fixing device according to claim 6, **characterised in that** said fittings (210'C) are bosses.

9. Fixing device according to any of claims 5 to 8, **characterised in that** the head (210'B) of the key (210') comprises a boss (210'D) that is capable of locking in a break (125) provided in the cambered portion (121) of said carrier (100).

10. Fixing device according to any of claims 5 to 9, **characterised in that** the head (210'B) of the key (210') is in the shape of a hook.

11. Device for fixing to a wall a cable-routing duct (10') having a base (11') that is provided with openings (12'), said fixing device comprising a carrier (100) that is provided with a first part (110) to be fixed to said wall and with a second part (120) that is capable of supporting said duct (10'), and locking means (300) for fixing said duct (10') to said carrier (100), **characterised in that** said second part (120) of said carrier (100) comprises at least one cambered portion (121) that defines a channel (C) on the inside thereof, said cambered portion (121) being pierced by apertures (122) that are mutually spaced along the length of said cambered portion (121) and that define therebetween cambered projections (121 A) that protrude above a face (123A) of said second part (120) of the carrier (100), and **in that** said locking means (300) comprise two locking elements (310; 310'; 310", 320), specifically a first element (310; 310'; 310") that is capable of being positioned, in line with one of said apertures (122) in said cambered portion (121), in a first direction (Z) that is perpendicular to said face (123A) of said second part (120) of said carrier (100), passing through at least one opening (12') provided in the base (11') of said duct (10'), and a second element (320) that is capable of being engaged in said channel (C) in a second direction (X; Y) that is parallel to said face (123A) of the second part (120) of said carrier (100) so as to cooperate with said first element (310; 310'; 310") by sandwiching the base (11') of said duct (10') that is supported on the ridges of said cambered projections (121 A) in order to immobilise said duct (10') on said carrier (100).

12. Fixing device according to claim 11, **characterised in that** said second direction is the direction (X) of the longitudinal axis of said channel (C).

13. Fixing device according to claim 11, **characterised in that** said second direction is a direction (Y) that is transverse to the longitudinal axis of said channel (C).

14. Fixing device according to any of claims 11 to 13, **characterised in that** the second element is a U-shaped pin (320).

15. Fixing device according to any of claims 11 to 14, **characterised in that** the first element is a button (310), the shank (311) of which comprises a through-opening (312) for the passage of said second element (320).

16. Fixing device according to any of claims 11 to 14, **characterised in that** the first element is a staple (310'; 310"), the arms (311'; 311") of which form, at the ends (312'; 312") thereof, openings for said second element (320) to pass through.

17. Fixing device according to any of claims 11 to 16, **characterised in that** said second element (320) comprises immobilisation means (322) that are capable of locking said second element in position in said first element (310; 310'; 310").

18. Device for fixing to a wall a cable-routing duct (10') having a base (11') that is provided with openings (12'), said fixing device comprising a carrier (100) that is provided with a first part (110) to be fixed to said wall and with a second part (120) that is capable of supporting said duct (10'), and locking means (400) for fixing said duct (10') to said carrier (100), **characterised in that** said second part (120) of said carrier (100) comprises at least one cambered portion (121) that defines a channel (C) on the inside thereof, said cambered portion (121) being pierced by apertures (122) that are mutually spaced along the length of said cambered portion (121) and that define therebetween cambered projections (121 A) that protrude above a face (123A) of said second part (120) of the carrier (100), and **in that** said locking means (400) comprise two locking elements (410, 420), specifically a first element (410) that is capable of latching onto said duct (10') and of being transversely engaged, by means of an aperture (122), in said channel (C) while being parallel to said face (123A) of the second part (120) of said carrier (100), the base (11') of said duct (10') being supported on the ridges of said cambered projections (121 A), and a second element (420) that is capable of being longitudinally engaged in said channel (C) for insertion between said cambered projections (121 A) and said first element (410) and to immobilise said duct (10') on said carrier (100).

19. Fixing device according to claim 18, **characterised in that** said first element is a clip (410) and said second element is a U-shaped pin (420).

20. Fixing device according to any of claims 1 to 19, **characterised in that** said second part (120) of the carrier (100) comprises, on the two longitudinal edges thereof, two cambered portions (121) that are pierced by apertures (122) that are spaced out over the length of said cambered portions (121), the apertures (122) located on the same side of said carrier (100) being positioned in pairs on the same level line.

21. Fixing device according to claim 20, **characterised in that** said second part (120) comprises a planar central portion (123) that extends between the two cambered portions (121) of said second part.

22. Fixing device according to claim 21, **characterised in that** said planar central portion (123) comprises a series of elongate holes (124) that are spaced out over the length of said second part (120).

23. Fixing device according to any of claims 1 to 22, **characterised in that** each cambered portion (121) of said second part comprises a first series of apertures (122) that are spaced out over the length of said cambered portion (121), are arranged on one side of said carrier and define therebetween cambered projections (121 A), and a second series of apertures (122) that are spaced out over the length of said cambered portion (121), are arranged on another, opposing side of said carrier and define therebetween cambered projections (121 A).

24. Fixing device according to claim 23, **characterised in that** the apertures (122) in the second series are offset relative to the apertures (122) in the first series.

25. Fixing device according to claim 23, **characterised in that** the apertures (122) in the second series are opposite the apertures (122) in the first series.

26. Fixing device according to any of claims 1 to 25, **characterised in that** the first part (110) of said carrier (100) is continuously connected to the second part (120) by an angled portion (130) such that said carrier (100) is in the shape of an angle bracket.

27. Device according to any of claims 1 to 26, **characterised in that** the first part (110) of said carrier (100) comprises a planar central portion (113) that is provided with a series of elongate holes (114) that are spaced out over the length of said first part (110).

28. Fixing device according to either claim 26 or claim 27, **characterised in that** the first part (110) of said carrier (100) also comprises a cambered portion (111) in the extension of each cambered portion (121) of said second part (120).

29. Fixing device according to claim 28, **characterised in that** said first part (110) of the carrier (100) comprises, on the two longitudinal edges thereof, two cambered portions (111) that each define a channel (C) on the inside thereof and that are separated from one another by a planar central portion (113) that is pierced by elongate holes (114) that are spaced out over the length of said first part (110).

30. Fixing device according to either claim 28 or claim 29, **characterised in that** each cambered portion (111) of said first part (110) of said carrier (100) is pierced by apertures (112) that are mutually spaced along the length of said cambered portion (111) and that define therebetween cambered projections (111 A) that protrude above a face (113A) of said first part (110) such that said carrier (100) is reversible, having identical or similar first and second parts (110, 120).

31. Fixing device according to any of claims 1 to 30, **characterised in that** said carrier (100) is formed in one piece from sheet metal.

32. Fixing device according to any of claims 1 to 30, **characterised in that** said carrier (100) is formed in one piece from a plastics material by means of moulding.

33. Fixing device according to any of claims 28 to 32, **characterised in that** the two longitudinal edges of said carrier are cambered so as to form two cambered portions (121, 111) that are parallel and have an open cross section.

34. Fixing device according to claim 33, **characterised in that** one of said longitudinal edges is cambered towards one side of said carrier (100) such that said cambered portion (121, 111 ) thus formed opens from said side of said carrier (100), whereas the other one of said longitudinal edges is cambered towards the other, opposing side of said carrier (100) such that said cambered portion (121, 111) thus formed opens from the other, opposing side of said carrier (100).

35. Fixing device according to claim 33, **characterised in that** the two longitudinal edges of said carrier (100) are cambered towards the same side of the carrier (100) such that said cambered portions (121, 111) thus formed open from this side of said carrier.

36. Fixing device according to any of claims 1 to 35, **characterised in that** the apertures (122, 112) made in each cambered portion (121, 111) are cut-out openings having a closed outline.

37. Fixing device according to any of claims 1 to 35, **characterised in that** the apertures (122, 112) made in each cambered portion are cut-out notches having an open outline.

38. Fixing device according to any of claims 1 to 35, **characterised in that** the apertures (122, 112) made in each cambered portion (121, 111) are produced by cutting and stamping out parts of the cambered portion (121, 111).
